# EUROPEAN PATENT APPLICATION

(11) **EP 4 191 840 A1**
(43) Date of publication of application: **07.06.2023**
(21) Application number: 22210352.5
(22) Date of filing: 29.11.2022
(51) Int. Cl.: H02K 3/47, B21D 41/04, H02K 7/00, H02K 15/03

(54) **MOTOR ROTOR AND METHODS OF MANUFACTURE**

(30) Priority: 30.11.2021 GB 202117310; 28.11.2022 GB 202217803
(71) Applicant: ETA Green Power Limited, Hethel NR14 8FB (GB)
(72) Inventor: BOWMAN, Liam, Hethel, NR14 8FB (GB); MORGAN, David, Hethel, NR14 8FB (GB)
(74) Representative: Cavanna, Edward Paul

(57) **Abstract**

The present invention relates to a slotless motor including a thin-walled hollow rotor body 100, and methods of manufacture of such rotors, the methods including hot forming and machining steps. The rotor body has a rotational axis 102 and comprises a first cylindrical portion 104 having a first diameter, a second cylindrical portion 106 having a second diameter, larger than the first diameter and a third cylindrical portion 108 having a third diameter, smaller than the second diameter, the third cylindrical portion located at a second end of the rotor body 100. A first end cap 110 joins the first and second cylindrical portions together, and a second end cap 112 joins the first and second cylindrical portions together. The first, second and third cylindrical portions are all arranged coaxially with the rotational axis 102 of the rotor 100 such that the second cylindrical portion 108 and the first and second end caps collectively define a hollow cavity 114 in the rotor body 100. The rotor body 100 may be provided with a Halbach array.

## Description

This application relates to rotors for electric motors, and specifically to rotors directed towards lightweight rotor designs.

As the world moves increasingly away from fossil fuel use and towards an electrically powered society, focus is directed ever more towards improving efficiency of the electrically powered solutions. A large sector poised for electrification is that of the automotive industry and other uses for electrically driven motive power, such as that provided by electric motors. There is therefore a drive towards improving the efficiency of electric motors.

This application is directed towards the problem(s) set out above in relation to electric motor design motors.

Disclosed herein is a method for producing a rotor for use in a slotless electric motor, the method comprising: providing a hollow tube having a first end and a second end and a central portion therebetween; and using hot forming to deform the tube to form a first narrowed portion at the first end and a second narrowed portion at the second end; wherein the tube is rotated during deformation; and wherein during hot forming of the tube to form the first narrowed portion, the first end is heated and during hot forming of the tube to form the second narrowed portion, the second end is heated, thereby providing a rotor in which the central portion encloses a hollow cavity located between the first and second narrowed portions, the central portion having a larger diameter than the first and second narrowed portions and joined to the first and second end portions by first and second end caps respectively.

The first and second ends are narrowed to provide first and second diameters respectively at these points by the time the method completes. Due to the narrowing process, each of the first and second diameters are therefore narrower than the diameter at the central portion, the central portion remaining at its diameter in the undeformed tube.

The rotation during the deformation is about the about tubular axis, i.e. the tube has rotational symmetry about a longitudinal axis (through the hollow central cavity) and is rotated about that longitudinal axis during deformation. At this time, hot forming tools may be used to assist in shaping the end portions to the desired dimensions, in combination with the rotation to ensure that the resulting rotor has as much rotational symmetry as possible.

In this method, the central portion does not need heating or deforming, so can be set at desired dimensions and material properties by selecting the tube appropriately. In particular, the rotational symmetry of the central (i.e. widest) portion can be fixed before shaping starts (including e.g. machining the tube prior to hot forming, if particular features are to be included). Rotational symmetry of the central portion is a relevant consideration, since this is the widest part, so for a given mass per unit length of the rotor, the moment of inertia will be larger, and deviations from rotational symmetry will have a larger effect on this portion. Similarly, certain material properties may be damaged by heating and/or deforming a part, so the fact that the central portion need not undergo deformation and heating means that the material properties of the original tube can be retained in a controlled manner.

The hot formed process allows the rotor to start as a thin-walled cylinder. Before starting, machining can be applied where possible and desirable to reduce weight and/or provide desirable surface properties to both internal and external surfaces. This thin-walled, lightweight technology can be used for all motor designs, e.g. for existing technologies such as slotted motors. However, with conventional motors such as slotted motors the thin wall can lead to increases in eddy losses in the material, reduced magnetic strength due to lack of field in the back steel and/or a lack of mechanical support, leading toward thicker backing material being desirable to support such fields. Other methods of a hollow rotor include just a tube in which the magnets are attached to the outer diameter of the tube. Again, this has to be thick to either support mechanical fixings (such as threaded holes) or has to have the mechanical thickness to support press fit of a shaft as to not damage the magnets fixed to the outer diameter of the shaft. All prior solutions required a thick back steel to achieve a desirable solution that works for performance and mechanical requirements. The present invention, by contrast allows the full benefit of the thin-walled arrangement to be utilised.

Optionally, induction heating may be used in the hot forming process. The heating (whether provided by induction or otherwise) may be applied only to the portions of the tube which are to be deformed (e.g. the first end, the first end cap, the second end cap, the second end).

The method of may further comprise machining the rotor to: improve rotational symmetry of the rotor; provide attachment features or other connectors on one or both of the narrowed portions; and/or to reduce weight of the rotor. These machining steps can be used to optimise the rotor for a given application.

The first end may be deformed separately to the deformation of the second end, for example, the method may include deforming the first end to form the first narrowed portion; and subsequently deforming the second end to form the second narrowed portion.

Specifically, after deforming the first end and prior to deforming the second end, the method may include applying a machining step to an interior of the central portion; an interior surface of the first end portion; and/or an interior surface of the first end cap.

Additionally, or alternatively, the method may include integrating one or more elements for providing cooling and/or magnetic properties to: an interior of the central portion; an interior surface of the first end portion; and/or an interior surface of the first end cap. Arranging the method steps in this order (i.e. narrowing one end, then machining or adding elements, then narrowing the second end) allows access to parts of the interior of the rotor which would otherwise not be possible, thereby improving the end result by providing additional versatility to the manufacturing process.

Optionally, the tube which is provided at the start of the method has a constant internal diameter along a length of the tube. Similarly, the tube which is provided at the start of the method may have an external diameter which varies along a length of the tube. That is to say that the tube which is provided at the start of the method may have a varying wall thickness, for example may have a thicker wall thickness in the central portion between the first and second ends than the wall thickness at each of the first and second ends. A constant internal diameter ensures that all areas of undeformed tube are easily accessible and have predictable properties for processing steps during the production process to be implemented. Allowing the wall thickness to vary along the length of the tube can assist in forming an end product of desired properties.

In particular, the central portion does not undergo any deformation, and so can be selected to have any wall thickness demanded by the envisaged application. Since this is not deformed, the tolerance of this thickness can be tightly controlled ahead of manufacture and the rotational symmetry of this portion can be assured to a high degree of accuracy. In addition, the wall thickness can be chosen to be substantially thinner than in other designs due to this specific manufacturing process. Finally, since the end portions are deformed to become narrowed portions at each end, the material making up the end portions of the tube is distributed over a smaller diameter by the time the method has completed. This reduction in diameter results in the wall thickness of those regions becoming thicker (since a fixed amount of material becomes distributed over a smaller cross-sectional area when the diameter of that part is reduced in the narrowing process). In order to counteract this, the wall thickness of the tube provided at the initial stage of the process may be thinner at each of the ends, with the specific thickness being chosen to provide the desired final wall thickness at the narrowed ends at the end of the process.

The hot forming method disclosed herein starts with a tubular device which may be a straight tube but also may be a shape created by mechanical treatment. For example, thinner walls in the tubular device can mean less material to is needed to be removed later (which may be difficult or impossible in any case, once the rotor has been formed to enclose a cavity) to achieve a lower weight rotor. The increased complexity in the construction procedure is justified by the improved efficiency of the electric motor due to the lighter rotor.

It will be apparent that the initial tube may have many starting forms. For example, it may be a part of a straight cylindrical tube with constant diameters inside and outside; a machined tubular device created by turning of a tube while taking off some material in order to achieve pre-optimised wall thickness to start the hot forming process; or a tubular device created by a different transformation method (forging, pressing, casting).

Magnetised or magnetisable portions may further be attached to an external surface of the central portion. The magnetisable portions may be subsequently magnetised (after attachment) to form magnetised portions. Additionally or alternatively the method may include regions of the central portion to form magnetised portions.

The method may further comprise forming a Halbach array on the external surface of the widened portion, in which a strong flux side of the Halbach array is oriented outwardly from the rotor.

This ensures that the flux is strongest on the exterior of the rotor and is low or even approaching zero in the hollow interior of the array. Note that the use of a hollow rotor in combination with a Halbach array is particularly beneficial, as this makes use of a synergy between the hollow rotor and the Halbach array. In brief the Halbach array is arranged to direct most or all of the flux of the magnetised portions outwardly, meaning that the flux in the hollow interior of the rotor is small or negligible. This in turn means that the rotor need not be arranged to direct flux in any particular manner, and therefore can be hollow while maintaining a high efficiency.

That is to say that some or all of the magnetised portions may be separate elements attached to the central portion. Similarly, some or all of the magnetisable portions may be separate elements attached to the central portion for subsequent magnetisation. In a further example some or all of the magnetised or magnetisable portions are magnetised regions of the central portion. In some examples the magnetisation may be provided in part as separate elements attached to the central portion and in part as magnetised portions of the central portion. As an example, the central portion may have a series of axial grooves for receiving separate magnetised elements with regions of the central portion located between the axial grooves being magnetisable to allow for a continuous magnetisation (albeit in directions which vary with angle) around the central portion. This provides a rotor ready for use within a suitable set of electrically controllable stator coils to form a motor. As noted above, the magnetised portions may be arranged in a Halbach array, in which a strong flux side of the Halbach array is oriented outwardly from the rotor.

The magnetised or magnetisable portions may be attached using an adhesive layer, for example they may be bound within the adhesive layer. A suitable adhesive is an epoxy resin, which provides a strong and durable mounting.

The method may include fitting a protective sleeve around the magnetised or magnetisable portions, the protective sleeve being located adjacent to and outwardly of the magnetised or magnetisable portions. This can help to maintain the magnetised portions in their desired locations.

The hollow tube may be formed from iron or iron alloys such as steel. An example of a suitable starting material from which to form the rotor bodies described herein are seamless cold-drawn steel tubes such as those set out in EN 10305-1 : 2016. A more specific example of a tube from which to form the rotor bodies described herein are those compliant with standard EN 10305-1 : 2016 E355 +C. This class of materials combines the desired strength characteristics with suitable magnetic properties.

Also disclosed herein is a slotless electric motor comprising: an outer layer of slotless stator windings defining a cylindrical cavity; and a rotor located within the cylindrical cavity; wherein the rotor is hollow, having a rotational axis about which the rotor is rotationally symmetrical, and having: a first end portion having a first diameter and located at a first end of the rotor; a central portion having a second diameter, larger than the first diameter; and a second end portion having a third diameter, smaller than the second diameter, the first and second end portion located at opposed ends relative to the central portion; wherein the first end portion is joined to the central portion by a first end cap and the second end portion is joined to the central portion by a second end cap; wherein the central portion and the first and second end caps collectively define a hollow cavity in the rotor; wherein the central portion is provided with magnetised portions; and wherein a ratio of radial thickness of non-magnetised parts of the central portion to magnetised parts of the central portion is less than 1.

The outer layer of slotless stator windings is not to be interpreted as necessarily being the outermost layer of the motor. It will be appreciated that outside of this there may additionally be a housing, support structure, control and power electronics, and other components familiar to the skilled person.

The ratio of radial thickness of non-magnetised parts of the central portion to magnetised parts of the central portion is preferably as low as possible, for example less than 0.75, 0.5 or even as low as 0.25. Where the central portion itself is selectively magnetised, the ratio may go as low as 0 since the wall is itself the magnetised portion, i.e. there is no dedicated supporting material.

Traditional rotor designs have struggled to reduce the weight of the rotor (e.g. by driving the ratio of radial thickness of non-magnetised parts of the central portion to magnetised parts of the central portion as low as possible) because of the negative impacts on mechanical strength and magnetic performance.

Optionally, the magnetised portions are arranged in a Halbach array with a strong flux side of the Halbach array being outwardly facing.

The combination of a slotless motor, incorporating a hot formed rotor (which allows for a thin wall) and an optional Halbach array allows for an extremely lightweight solution where magnetic performance is maintained with the ability to utilise the weight reduction down to just the mechanical requirements of the design. The synergy of the slotless topology of the stator windings allows for a thin-walled design. Including a Halbach array on the rotor further contributes to the synergy of the arrangement. These features are not present in combination in any known device and represents a genuine leap forward for the industry.

Due to the magnetic properties of the Halbach array, this thin wall can be optimized to just the mechanical requirements of the electric motor due to the low fields generated in the backing material. That is to say that the rotor can be designed in such a way as to focus on fulfilling the minimum structural (mechanical strength) requirements for the intended use (size, torque, rpm, etc.), without needing additional thickness above and beyond this to direct magnetic flux. Using this advanced rotor with a slotless topology in a motor further improved the applicability of thin wall designs. With conventional (slotted) motors the fields from the stator teeth are higher in magnitude of magnetic flux due to the magnetic gap being much smaller when compared with slotless motors. For example, a slotted motor will have magnetic gaps of 0.3mm-1mm, while the gap slotless motor is approximately 2-8mm. This reduction in magnetic field generated results in lower field strengths being generated in the backing material of the rotor (mechanical support for the magnetised materials) on commutation of the stator. Methods of overcoming this high field generation typically include adding laminated steel to which the magnets are mounted to and/or providing thicker material to reduce losses and help with heat produced by eddy losses to reduce heat-based demagnetisation of the magnets. By using a slotless arrangement, therefore, the thickness of the rotor wall can be made even thinner.

The combination of the slotless motor and a Halbach array allows material to be removed from the rotor up to the point of mechanical requirements of torque loading, fatigue and stress requirements of the rotor. This is simply not achievable with any existing solutions. If other methods were to try to achieve this, a sacrifice in thermal properties, magnetic properties or efficiency would have to be made to remove sufficient material. the present inventions avoids the need to make such a choice.

The rotor may be formed as a single piece. For example, the rotor may be formed according to the method set out above, or indeed in accordance with other methods described herein.

It will be appreciated that forming the rotor in this way leads to a rotor having notable differences in physical properties to distinguish from rotors formed in a different manner. This because the method provides a rotor which has been formed from deformations of a single part, meaning that there are no weaknesses due to welding, and having been hot formed, so having fewer strains than cold worked parts. In particular, since the central portion which becomes the central portion to which magnetised parts are added is never heated or deformed, it remains pristine, meaning that this region can be machined, magnetised, etc. as needed prior to the formation procedure without risking changes in these properties due to the heating and/or deformation process, because this part does not undergo those processes.

As noted elsewhere, the magnetised portions may be separate elements attached to the central portion, or they may be magnetised regions of the central portion. The rotor itself may be formed from iron or iron alloys such as steel.

The rotor may be at least 100mm long; the diameter of the central portion is at least 75mm; and/or the rotor weighs 1kg or less. Indeed, the power to weight ratio of the motor may be 20 kW/kg, 25kW/kg or even 30kW/kg.

Disclosed herein is a hollow rotor body for a motor, the rotor body having a rotational axis, and comprising: a first cylindrical portion having a first diameter and located at a first end of the rotor body; a second cylindrical portion having a second diameter, larger than the first diameter; a third cylindrical portion having a third diameter, smaller than the second diameter, the third cylindrical portion located at a second end of the rotor body, opposite the first end; a first end cap joining the first cylindrical portion to the second cylindrical portion, located towards the first end of the rotor body; and a second end cap joining the second cylindrical portion to the third cylindrical portion, located towards the second end of the rotor body; wherein the second cylindrical portion is located between the first and third cylindrical portions and the first, second and third cylindrical portions are all arranged coaxially with the rotational axis of the rotor body; and wherein the second cylindrical portion and the first and second end caps collectively define a hollow cavity in the rotor body. This arrangement provides an efficiency benefit, since a hollow rotor body is lighter and has a lower moment of inertia, and therefore requires less energy to start spinning and/or maintain a given rotational velocity. Optionally, the third diameter is the same as the first diameter.

Optionally the rotor body is formed as a single piece. For example, the rotor body may be hot formed from a hollow tube. By forming from a single piece, the material properties of the resulting rotor body are different from those of e.g. a multi-part welded arrangement and also from a cold formed part (although these options provide alternative ways to produce the part). The material properties of a single-piece part are different since there are no joints which can form weak points. In addition, a single-piece rotor body may provide a more homogeneous magnetic response than rotor bodies having joins from the manufacturing process. Additionally or alternatively, the hot forming ensures that stresses and strains from the deformation to the desired shape do not accumulate as they would in cold forming processes.

As an example, the single part hollow tube may be induction heated in a desired part of the tube, and the tube deformed by compressing the ends of the tube and/or by spinning the tube, causing the heated section to bow outward. In conjunction with external shaping tools (e.g. shaping rollers of circular cross-section), the final diameter of the heated section can be carefully controlled to a desired value. In addition, by spinning the rotor body as it is heated and shaped, the part can be formed with a consistent diameter in all angular directions (i.e. the widened portion is very close to being perfectly cylindrical). If needed, additional processing, for example milling, may be applied to the rotor body to improve its rotational symmetry. As part of the machining stage, it is also possible introduce features such as screw threads, attachment features, connectors etc.

Alternative arrangements may form a multi-part rotor body, for example by forming a pair of goblet-shaped parts (e.g. by hot or cold forming) and joining the two goblet-shaped parts at their rims. In other examples three parts may be assembled, for example a left axle, a right axle and a central hollow rotor portion. In each case, the location of the joints can be chosen to minimise the strain on the joints during rotation of the rotor body. This can simplify the production process.

Optionally the rotor body further comprises magnetised or magnetisable portions on the second cylindrical portion. Some or all of the magnetised portions may be separate elements attached to the second cylindrical portion. Similarly some or all of the magnetisable portions may be separate elements attached to the second cylindrical portion for subsequent magnetisation. In a further example some or all of the magnetised or magnetisable portions are magnetised regions of the second cylindrical portion. In some examples the magnetisation may be provided in part as separate elements attached to the second cylindrical portion and in part as magnetised portions of the second cylindrical portion. As an example the second cylindrical portion may have a series of axial grooves for receiving separate magnetised elements with regions of the second cylindrical portion located between the axial grooves being magnetisable to allow for a continuous magnetisation (albeit in directions which vary with angle) around the second cylindrical portion. This provides a rotor ready for use within a suitable set of electrically controllable stator coils to form a motor.

Of course, the efficiency advantages of the presently disclosed design stem in part from the reduced weight of the rotor body, so there is a benefit in supplying this lighter rotor body in general, with specific magnetic arrangements being later configurable to any specific use which is desired. Where the magnetised or magnetisable portions are attached as separate elements, this can allow the rotor body to be formed of a first material specifically selected to allow the rotor body to fulfil its intended role, e.g. materials with sufficient mechanical strength and/or which are able to direct magnetic flux in the desired manner. Similarly the attachable portions can be selected specifically to fulfil their own role, e.g. to use a strongly magnetised and/or magnetisable material to provide a large magnetic flux and thereby to increase the torque generated by external stator coils interacting with the rotor body. Neodymium-based magnetic alloys are an example of a suitable material for the magnetised or magnetisable portions. To be even more specific, NdFeB may be used, for example NdFeB N42H.

Where magnetised portions are attached, the magnetised portions may be attached using an adhesive, preferably wherein the adhesive is an epoxy resin. For example, the magnetised portions may be embedded in an epoxy resin. This provides a strong and durable mounting.

The magnetised portions may be arranged in a Halbach array, such that a strong flux side of the array is outwardly facing. This ensures that the flux is strongest on the exterior of the rotor body and is low or even approaching zero in the hollow interior of the array. Note that the use of a hollow rotor body in combination with a Halbach array is particularly beneficial, as this makes use of a synergy between the hollow rotor body and the Halbach array. In brief the Halbach array is arranged to direct most or all of the flux of the magnetised portions outwardly, meaning that the flux in the hollow interior of the rotor body is small or negligible. This in turn means that the rotor body need not be arranged to direct flux in any particular manner, and therefore can be hollow while maintaining a high efficiency.

Optionally the rotor body further comprises a protective sleeve located adjacent to and outwardly of the magnetised portions. This can help to maintain the magnetised portions in their desired locations.

The rotor body may be formed from iron or iron alloys such as steel. An example of a suitable starting material from which to form the rotor bodies described herein are seamless cold-drawn steel tubes such as those set out in EN 10305-1 : 2016. A more specific example of a tube from which to form the rotor bodies described herein are those compliant with standard EN 10305-1 : 2016 E355 +C. This class of materials combines the desired strength characteristics with suitable magnetic properties.

Optionally, the rotor body is at least 100mm long. Optionally the diameter of the second cylindrical portion is at least 75mm. Optionally the rotor body weighs 1kg or less. In general, the power : weight ratio for rotor bodies of the type described herein may be at least 18kW/kg, with larger rotor bodies being able to provide higher power: weight ratios. In some cases power to weight ratios of 20 kW/kg, 25kW/kg or even 30kW/kg or higher are achievable.

The rotor body described herein is intended to be used with suitable external electrically controlled stator coils to form an electric motor. The disclosure herein therefore extends to an electric motor comprising the rotor body described above.

Also described herein is a method of forming a single-piece rotor body for a motor, the method comprising: providing a hollow tube having a first diameter, a first end and a second end; and deforming the tube to form a widened portion enclosing a hollow cavity located between the first and second ends, the widened portion having a constant second diameter greater than the first diameter.

Alternatively, this disclosure extends to a method of forming at least part of a rotor body for a motor, the method comprising: providing a hollow tube having a first diameter, a first end and a second end; and deforming the tube to form a widened portion, the widened portion having a constant second diameter greater than the first diameter. Optionally, the widened portion is located spaced apart from at least one of the first and second ends. Where the widened portion is spaced apart from only one end (and is therefore located at the other end), a second rotor body part may be formed having a widened portion having a constant diameter equal to the second diameter. These two rotor body parts may then be joined to one another at their widened portions (e.g. by welding or any other suitable method), thereby forming a hollow rotor body. Optionally, the widened portion is located spaced apart from both the first end and the second end. In other words, the widened portion encloses a hollow cavity, being joined to the non-widened portions by end caps. Optionally, the widened portion is located at both of the first and second ends, leading to a hollow rotor piece. Additional portions, such as axle portions may subsequently be joined onto the hollow rotor portion, e.g. by welding or any other suitable means.

Optionally the hollow tube is heated as part of the method, and the deformation is performed by hot forming. Where the rotor body is formed from a single piece, the material properties of the resulting rotor body are different from those of e.g. a multi-part welded arrangement or from a cold formed part (although these are alternative ways to produce the part). The material properties of a single-piece part are different since there are no joints which can form weak points. In addition, a single-piece rotor body may provide a more homogeneous magnetic response than rotor bodies having joins from the manufacturing process. Additionally or alternatively, where the rotor body is hot formed, the hot forming ensures that stresses and strains from the deformation to the desired shape do not accumulate in as they would in cold forming processes.

As an example, the single- or multi-part hollow tube designs may include induction heating applied to a desired part of the tube, and the tube, once hot, is deformed by compressing the ends of the tube and/or by spinning the tube and/or shaping the tube using external tools such as rollers to shape the tube, causing the heated section to bow outward. In conjunction with external shaping tools (e.g. shaping rollers of circular cross-section), the final diameter of the heated section can be carefully controlled to a desired size. In addition, by spinning the rotor body as it is heated and shaped, the part can be formed with a consistent diameter in all angular directions (i.e. the widened portion is very close to being perfectly cylindrical). If needed, additional processing, for example milling, may be applied to the rotor body to improve its rotational symmetry. As part of the machining stage, it is also possible introduce features such as screw threads, attachment features, connectors etc. The heating (e.g. induction heating) may be applied only along a portion of the hollow tube, between the first and second ends.

Optionally the method further includes attaching magnetised or magnetisable portions to an external surface of the widened portion. Where magnetisable portions are attached to the external surface of the widened portion, the method further comprises magnetising the magnetisable portions to form magnetised portions. In yet further examples, the method may further comprise magnetising regions of the widened portion to form magnetised portions. That is to say that some or all of the magnetised portions may be separate elements attached to the widened portion. Similarly some or all of the magnetisable portions may be separate elements attached to the widened portion for subsequent magnetisation. In a further example some or all of the magnetised or magnetisable portions are magnetised regions of the widened portion. In some examples the magnetisation may be provided in part as separate elements attached to the widened portion and in part as magnetised portions of the widened portion. As an example the widened portion may have a series of axial grooves for receiving separate magnetised elements with regions of the widened portion located between the axial grooves being magnetisable to allow for a continuous magnetisation (albeit in directions which vary with angle) around the widened portion. This provides a rotor body ready for use within a suitable set of electrically controllable stator coils to form a motor.

Of course, the efficiency advantages of the presently disclosed design stem in part from the reduced weight of the rotor body, so there is a benefit in producing this lighter rotor body in general, with specific magnetic arrangements being later configurable to any specific use which is desired. Where the magnetised or magnetisable portions are attached as separate elements, this can allow the rotor body to be formed of a first material specifically selected to allow the rotor body to fulfil its intended role, e.g. materials with sufficient mechanical strength and/or which are able to direct magnetic flux in the desired manner. Similarly the attachable portions can be selected specifically to fulfil their own role, e.g. to use a strongly magnetised and/or magnetisable material to provide a large magnetic flux and thereby to increase the torque generated by external stator coils interacting with the rotor body. Neodymium-based magnetic alloys are an example of a suitable material for the magnetised or magnetisable portions. To be even more specific, NdFeB may be used, for example NdFeB N42H.

The magnetised portions may be arranged in a Halbach array, in which a strong flux side of the Halbach array is oriented outwardly from the rotor body. This ensures that the flux is strongest on the exterior of the rotor body and is low or even approaching zero in the hollow interior of the array. Note that the use of a hollow rotor body in combination with a Halbach array is particularly beneficial, as this makes use of a synergy between the hollow rotor body and the Halbach array. In brief the Halbach array is arranged to direct most or all of the flux of the magnetised portions outwardly, meaning that the flux in the hollow interior of the rotor body is small or negligible. This in turn means that the rotor body need not be arranged to direct flux in any particular manner, and therefore can be hollow while maintaining a high efficiency.

Optionally the method further includes fitting a protective sleeve around the rotor body such that the protective sleeve is located adjacent to and outwardly of the magnetised portions. This can help to maintain the magnetised portions in their desired locations.

Where magnetised portions are attached, the magnetised portions may be attached using an adhesive, preferably wherein the adhesive is an epoxy resin. For example, the magnetised portions may be embedded in an epoxy resin. This provides a strong and durable mounting.

The rotor body may be formed from iron or iron alloys such as steel. An example of a suitable starting material from which to form the rotor bodies described herein are seamless cold-drawn steel tubes such as those set out in EN 10305-1 : 2016. A more specific example of a tube from which to form the rotor bodies described herein are those compliant with standard EN 10305-1 : 2016 E355 +C. This class of materials combines the desired strength characteristics with suitable magnetic properties.

Optionally, the rotor body formed by the method is at least 100mm long. Optionally the diameter of the widened portion is at least 75mm. Optionally the rotor body weighs 1kg or less. In general, the power : weight ratio for rotor bodies formed by the method described herein may be at least 18kW/kg, with larger rotor bodies being able to provide higher power: weight ratios. In some cases power: weight ratios of 20 kW/kg, 25kW/kg or even 30kW/kg or higher are achievable.

The technology discussed above is a combination of hot forming with reshaping by subtractive manufacturing which results in an optimized cost to weight to stability to centricity ratio. While in existing slotted machines such a rotor may be less efficient, this design shows greatly improved efficiency and weight reduction in a use case combined with slotless stators and brushless commuted engines. The specific hot forming on both ends of a tube combined with reshaping procedures after or even before and between the hot forming steps is beneficial in providing optimisation.

Benefits provided by this overall procedure include (relative to existing designs):
- Greatly improved stability and rotational symmetry by rotational hot forming, using a radial reduction tool and optional machining procedures before, during and after the deformation.
- Thin-walled rotors with a rotor wall thickness smaller than their magnet thickness and also smaller than radial thickness of the winding are possible due to the synergy of the various features described in detail elsewhere.
- Hot forming and reshaping the rotor during formation is especially beneficial for electric motors which have the majority of the field density outside of the rotor, e.g. as seen in Halbach arrays.
- Despite being thin walled, the lightweight rotor so formed nevertheless is sufficiently mechanically strong and provides effective magnetic properties.
- There is no need to have a material which can be magnetised but where steel is used for hot forming, this may be directly magnetised in most cases or become magnetised by the magnets of the array. The rotor could be made from nonmagnetic alloys as well, of course, but magnetic metal or alloys may provide an improved magnetic response.
- Preferred embodiments use a specific relation of widened central portion radius related to shaft radiuses (radii of the two end portions) and results in a specific ratio of wall thicknesses along the rotor.
- The end caps may have a transient wall thickness. The increased wall thickness which is produced by hot forming is used for stabilization of the shaft parts (end portions) at the transition. This allows wall thickness at all parts to be carefully controlled to meet the specific mechanical needs of the rotor.
- conversely, other parts of the end caps may be reshaped after hot forming in order to optimize weight, e.g. thin walls from outside or inside and/or selective removal of material such as incorporating radial spokes into the design.
- In weight-optimised embodiments the tubular structure may be of rotational symmetry but not a real cylinder, comprising thinner walls in the areas which will be transformed into a part of a compartment which may have reduced mass.
- In addition turning or milling procedures may be applied to reduce mass and reshape size of the rotor in the end cap compartments because here the hot forming results in a transition of wall thickness.
- Some example embodiments start with a tubular piece which is optimized in inner and outer diameter in order to achieve the right outer diameter after hot forming for combined treatment by turning and or milling which means taking off some material but reducing this waste material as far as possible.

The hot formed rotor described herein is preferably thin-walled and has little material behind the magnet array, the magnet array comprising an outward bound magnetic field with a certain relationship between outward bound field strength and inward bound magnetic field strength inside of the rotor. That is, the hot formed rotor is intended for use in a slotless motor and has a radial wall thickness which is substantially smaller than the radial thickness of the slotless stator windings. The radial thickness of the rotor drum (i.e. widest, central portion) is in the range of or smaller than the radial thickness of the magnet array.

There is a synergistic advantage of the combination of hot formed but thin-walled rotors and cylindrical Halbach magnet arrays. Halbach arrays have substantially smaller than average field strength in the inner volume of an inside rotor because the pusher magnets push the field outside. The result is a substantially higher field strength outside of the rotor, which is in the functional magnetic gap and the winding of the electric machine.

Thus, a relatively thin layer of metal can be used to carry the magnets. This is the reason why the outer part of the material may be taken off in the central portion after hot forming.

Another benefit is that hot forming creates soft iron with beneficial magnetic properties. But this is good for other array types as well. Hot formed rotors also can be used for magnet arrays which are no Halbach arrays and which may work without Halbach pusher magnets.

Collectively, this leads to a formation process which is low cost, allows for a smooth material flow of the deformed material, and which leads to little or no oxidation and debris during the procedure. The resulting rotor shows increases in mechanical strength and stability with excellent consistency in wall thickness and rotational symmetry. The process requires minimal material input and generates little waste material. In addition, the one-part formation process means that no welding connection and/or no press fit connection or other connection (e.g. bolts, screws etc.) is required.

Hot forming is particularly suitable for this process, when compared with other metal shaping processes. High pressure expansion procedures end up in higher cost and in less uniform material distribution and in lower stability of the rotor. During hot forming no other materials and no liquids (except some air or protective gas) are in contact with the tube or rotor.

Deep forging is known as a high precision but high-cost production technology. Typically, two parts would be forms and welded together. Hot forming requires no welding of multiple rotor parts after double sided hot forming of a tubular device as set out above. The mechanical stability after combined hot forming and material takeout may be even higher than after deep forging and welding. The costs of hot formed rotors are substantially lower. The hot forming process is substantially faster.

In case of a hot forming process with optimized wall thickness as described herein the necessary material takeout is reduced substantially. This results in an optimized material and cost efficiency and a reduced carbon footprint during production.

The invention will now be described by way of example only, with reference to the accompanying Figures, in which:
Figure 1A shows an example rotor body after a forming step in an axial view;
Figure 1B shows the rotor body of Figure 1A in cross-sectional view;
Figure 2A shows the rotor body of Figures 1A and 1B after a machining process, in an axial view;
Figure 2B shows the rotor body of Figure 2A in isometric view;
Figure 2C shows the rotor body of Figure 2A in side elevation;
Figure 2D shows the rotor body of Figure 2A in a cross-sectional view;
Figure 3A shows an example magnetised element for attachment to the rotor body of Figures 2A to 2D, having an outwardly directed magnetic north pole;
Figure 3B shows an example magnetised element for attachment to the rotor body of Figures 2A to 2D, having a leftwardly directed magnetic north pole;
Figure 3C shows an example magnetised element for attachment to the rotor body of Figures 2A to 2D, having a rightwardly directed magnetic north pole;
Figure 3D shows an example magnetised element for attachment to the rotor body of Figures 2A to 2D, having an inwardly directed magnetic south pole;
Figure 3E shows a protective sleeve for use with the magnetised elements of Figures 3A to 3D when mounted on the rotor body of Figures 2A to 2D;
Figure 4A shows a rotor in side elevation comprising the rotor body of Figures 2A to 2D, the magnetised elements of Figures 3A to 3D and the protective sleeve of Figure 3E;
Figure 4B shows the rotor of Figure 4A in cross-section;
Figure 4C shows the rotor of Figure 4A in an axial view;
Figure 4D highlights a Halbach array arrangement of magnetisable elements as shown in Figures 3A to 3D for attachment to the rotor body of Figures 2A to 2D;
Figure 4E is a graph plotting the magnetic field of the rotor of Figure 4A at various points illustrated on Figure 4A;
Figure 5A is an illustration of a two-part rotor body;
Figure 5B is an illustration of a three-part rotor body;
Figures 6a to 6c illustrate stages in a process of deforming a tube to form an example of a rotor;
Figures 7a to 7e illustrate stages in another process of deforming a tube to form an example of another rotor;
Figures 8a to 8c illustrate stages in yet another process of deforming a tube to form yet another example of a rotor; and
Figure 9 is a flow chart setting out steps in a process for forming a rotor.

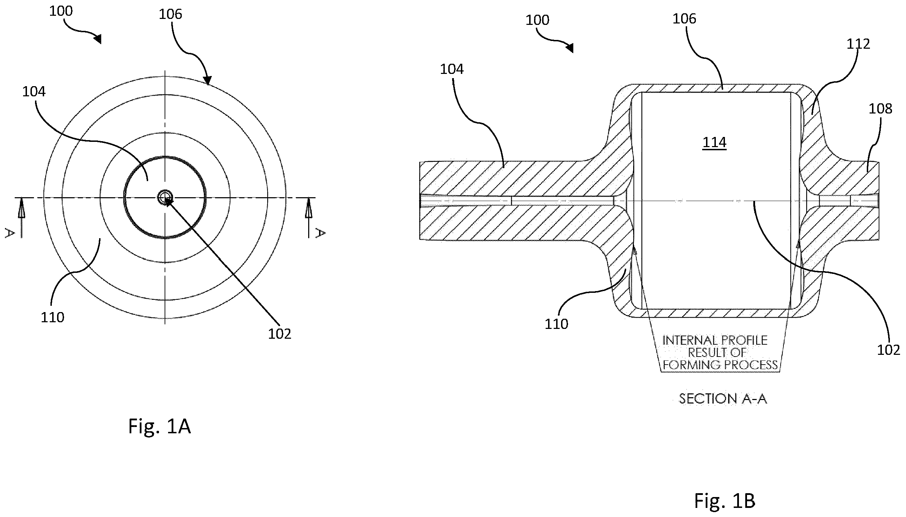

In Figures 1A and 1B, a hollow rotor body 100 is shown in axial and side cross-sectional views respectively. The hollow rotor body 100 has been formed by deformation from a single tube of uniform diameter. This tube initially has a rotational axis and a hollow centre. After deformation, the resulting hollow rotor body 100 retains a rotational axis 102, about which the rotor body 100 is substantially rotationally symmetrical. The uniform diameter of the initial tube used to form the hollow rotor body can be seen in parts of the hollow rotor body 100 which are largely or entirely undeformed - as in first narrow cylindrical portion 104 and third narrow cylindrical portion 108 located respectively at the left and right end of Figure 1B. These two narrow cylindrical portions 104, 108 are shown as having the same diameter, but in some cases, they may have different diameters from one another, for example by also deforming one or both of them, or by applying subsequent shaping steps such as milling.

In any event, the first cylindrical portion 104 is spaced apart from the third cylindrical portion 108 by a second cylindrical portion 106 (sometimes referred to as a widened cylindrical portion 106). In other words, the second (widened) cylindrical portion 106 is located between the first (narrow) cylindrical portion 104 and the third (narrow) cylindrical portion 108. The first 104 and third 108 cylindrical portions are each narrower than the second cylindrical portion 106. The first 104, second 106 and third 108 cylindrical portions are located coaxially with one another, with their central axes lying along the rotational axis 102 of the hollow rotor body 100.

The second cylindrical portion 106 is connected to the first cylindrical portion 104 by a first end cap 110. Similarly the second cylindrical portion 106 is connected to the third cylindrical portion 108 by a second end cap 112. The first 110 and second 112 end caps are also formed from the deformation of the initial tube. In general the shape shown in Figures 1A and 1B may be formed by deformation which may, for example, include heating a central portion of the tube (e.g. the parts which become end caps 110, 112 and widened portion 106) and spinning the tube and/or compressing the tube in an axial direction. This causes the central portion of the tube to bow outward to form the widened second portion 106. The tube can be placed inside moulding or shaping parts (e.g. rollers) during the deformation process to provide control over the width of the widened portion 106 and/or to provide control over the consistency of the production process.

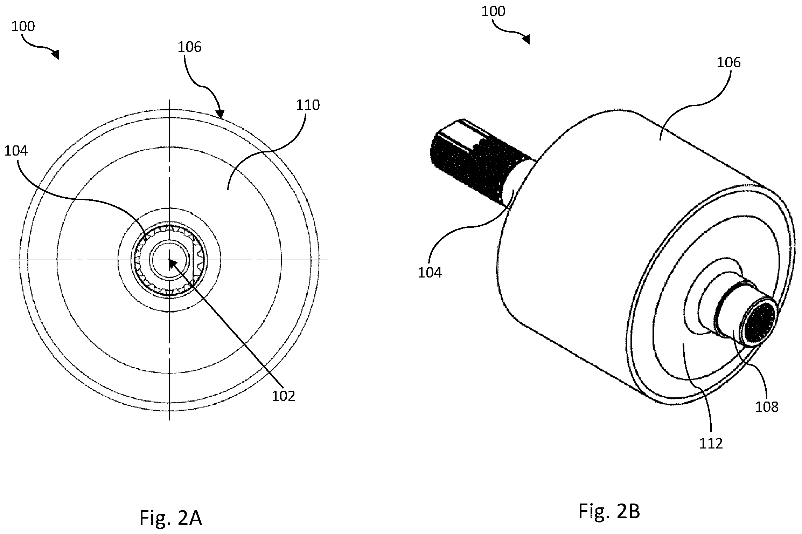

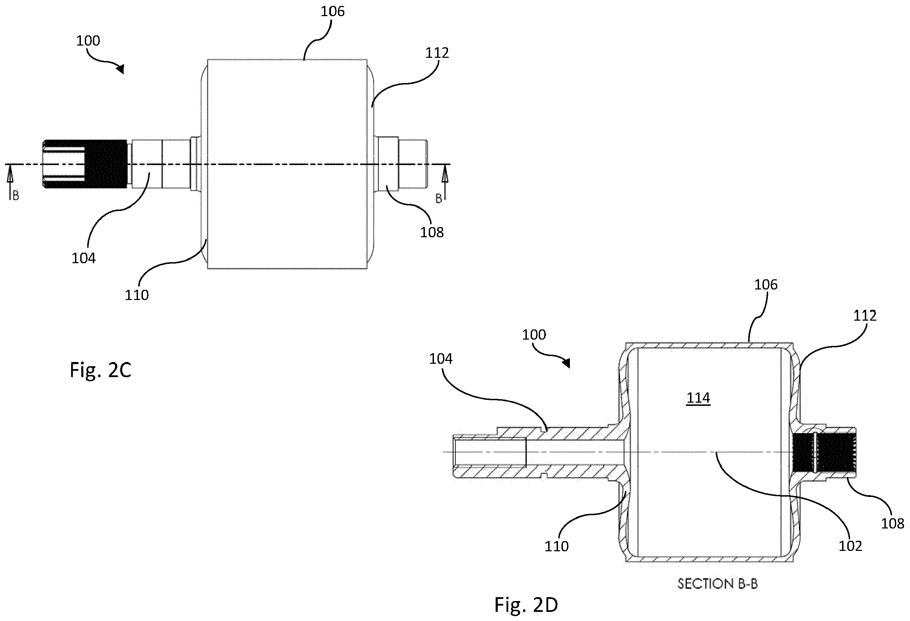

As an example, the hollow rotor body 100 may be formed by induction heating applied to a desired part of the tube, i.e. the heating may be applied only along a portion of the hollow tube, between the first and second ends, rather than to the whole tube. This means that less energy is required, and the deformation can be limited to the heated parts of the tube. The tube, once hot in the desired locations, may then be deformed as described above. In conjunction with external shaping tools (e.g. shaping rollers of circular cross-section), the final diameter of the heated section can be carefully controlled to a desired size. In addition, by spinning the rotor as it is heated and shaped, the part can be formed with a consistent diameter in all angular directions (i.e. the widened portion 106 is very close to being perfectly cylindrical). If needed, additional processing, for example milling, may be applied to the rotor to improve its rotational symmetry - see Figures 2A to 2D. As noted in Figure 1B, the forming process described above leads to an internal profile shape in which the internal parts of the end caps 110, 112 close to the rotational axis 102 bow inward.

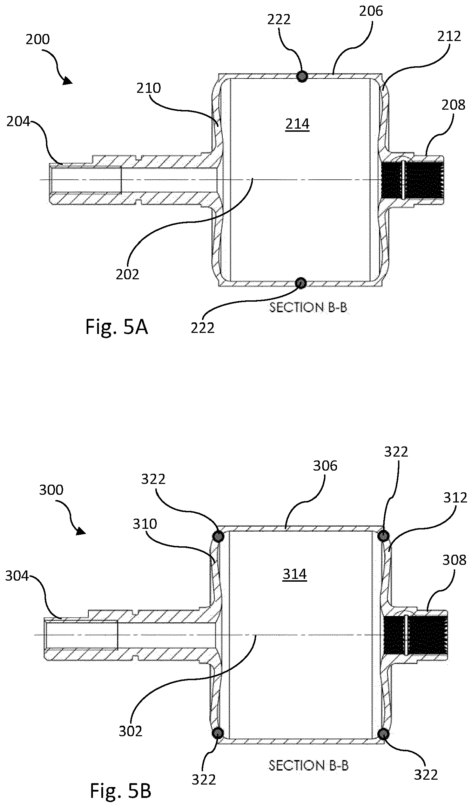

Note that the continuous deformation described above also results in the end caps 110, 112 being formed integrally with the first 104, second 106 and third 108 cylindrical portions. This forms a one-piece hollow rotor body 100, enclosing a hollow cavity 114. In other examples (see e.g. Figures 5A and 5B) the hollow rotor body 100 may be formed from multiple parts. The hollow rotor body 100 formed in this manner leads to a rotor which provides efficiency benefits in use, since a hollow rotor is lighter (and has a lower moment of inertia) than a solid rotor, and therefore requires less energy to start spinning and/or maintain a given rotational velocity.

By forming from a single piece, the material properties of the resulting rotor body 100 are different from those of e.g. a multi-part welded arrangement, although multi-part rotor bodies 200, 300 are described below. The material properties of a single-piece part are different since there are no joints which may form weak points. In addition, a single-piece rotor body 100 may provide a more homogeneous magnetic response than rotors having joins introduced during the manufacturing process.

The above examples relate to hot forming the rotor body 100. However, cold forming may also be used if desired. While hot forming helps to ensure that stresses and strains from the deformation to the desired shape do not accumulate as they would in cold forming processes, cold forming can be a more efficient procedure in some cases.

The rotor body 100 may be formed from iron or iron alloys such as steel. An example of a suitable starting material from which to form the rotor bodies 100 described herein are seamless cold-drawn steel tubes such as those set out in EN 10305-1 : 2016. A more specific example of a tube from which to form the rotors described herein are those compliant with standard EN 10305-1 : 2016 E355 +C. This class of materials combines the desired strength characteristics with suitable magnetic properties.

Turning now to Figures 2A to 2D, which show the rotor body 100 of Figures 1A and 1B after a machining step, for example milling. The machined rotor body 100 is shown in Figures 2A to 2D form axial, isometric perspective, side elevation, and side cross sectional view respectively. It can be seen from these Figures that the machining step has been applied various additional features such as screw threads, attachment features, connectors etc.

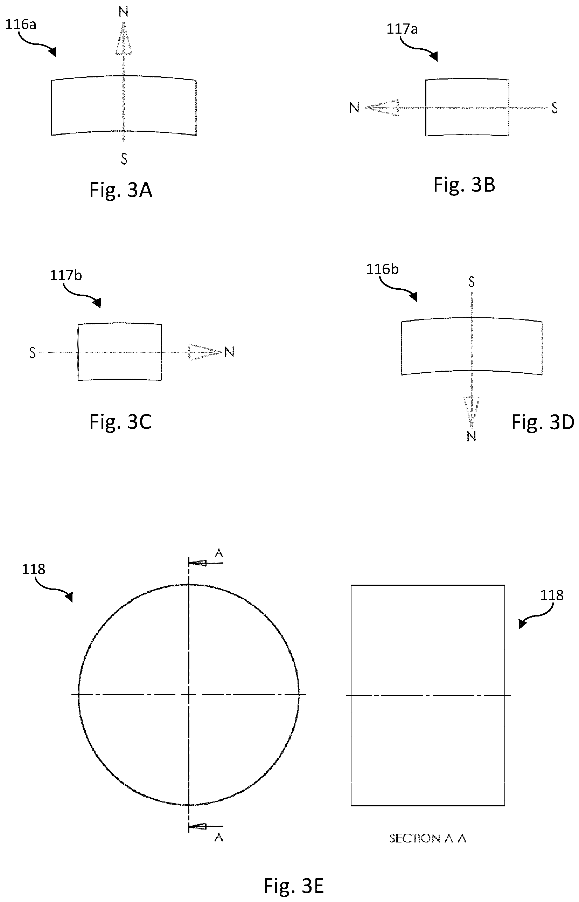

In addition, the machining step has thinned the wall thicknesses of the various parts of the rotor body 100. For example, the wall thickness of the first 104, second 106 and third 108 cylindrical portions has been thinned, leading to an even lighter rotor body 100 with a lower moment of inertia than that in Figures 1A and 1B. Note that the first 110 and second 112 end caps have also been thinned and made more regular, although this is much easier to achieve by machining the end caps 110, 112 from the exterior of the hollow rotor body. For this reason, great care is taken in the deformation step, to ensure that the end caps 110, 112 are as rotationally and axially symmetric as possible, at least on the interior (inside the cavity 114) since it may be very difficult or impossible to correct large internal defects in these parts by subsequent milling. The widened portion 106 has also been milled to form a smooth, regular cylindrical surface. This provides a surface for magnetic or magnetisable elements to be attached, as described in Figures 3A to 3D. In other cases, the milling or machining stage may provide delineations to guide a direct selective magnetisation of regions of the second cylindrical portion 106.

In Figures 3A to 3D illustrate various examples of magnetised portions 116a, 116b, 117a, 117b (sometimes referred to as magnetised elements) for attaching to the external surface of the second cylindrical portion 106 to thereby form a permanently magnetised rotor with any magnetisation pattern which may be desired achievable by attaching magnetised portions 116a, 116b, 117a, 117b in an appropriate arrangement. Each of the magnetised portions is shown in an axial view, highlighting the cross-sectional shape in an axial view. Each of the shapes shown has an extent in the axial direction approximately equal to the length of the second portion 106 (as measured in a direction parallel to the rotational axis 102, i.e. an axial length). In other words, the magnetised portions 116a, 116b, 117a, 117b each have an elongate or approximately oblong shape.

It can also be seen that each magnetised portion 116a, 116b, 117a, 117b, is provided with curvature on an upper (outward-facing) surface and also on an interior (inward-facing) surface. The inward-facing surface is curved to match that of the exterior of the second cylindrical portion 106 to allow the magnetised portions 116a, 116b, 117a, 117b to fit snugly around the outer circumference of the second cylindrical portion 106. The outward-facing surface curvature is chosen so that when the magnetised portions 116a, 116b, 117a, 117b are all mounted on the exterior surface of the second cylindrical portion 106, the outer surfaces of the magnetised portions 116a, 116b, 117a, 117b also lie on a single circle. This alignment is helpful for retaining cylindrical symmetry, and thereby allowing the rotor body 100 to rotate at high speed without introducing wobbling or other unwanted oscillations. in some cases, the magnetised portions may be arranged to not lie exactly parallel to the rotational axis 102 of the rotor body 100, but by form part of a helical shape extending both along and around the rotor body 100.

The magnetised portions 116a, 116b, 117a, 117b, are shown with their magnetic moment indicated on them with an arrow. As can be seen, Figure 3A shows an outwardly directed portion 116a having a north pole pointing outward, Figure 3B shows a leftwardly directed portion 117a having a north pole pointing to the left, Figure 3C shows a rightwardly directed portion 117b having a north pole pointing to the right, and Figure 3D shows an inwardly directed portion 116b having a north pole pointing inward. It will be noted that the left- and right-wardly directed portions 117 are interchangeable by rotating the element 180° about the vertical axis of the Figure due to the symmetry of the parts. This may mean that only three types of magnetised portion need be supplied (outward, inward and a generic sideways variant which can be oriented left or right as needed).

This is not true of the in- and out-wardly directed portions 116, since the required rotation to transform an outwardly directed north pole to an inwardly directed north pole would not result in the correct curvature for mounting the magnetised portion 116 to the widened cylindrical portion 106 also facing inwards. In cases where there is no curvature applied to the magnetised portions 116a, 116b, 117a, 117b (e.g. relying instead on careful mounting of the magnetised portions 116a, 116b, 117a, 117b to the widened cylindrical portion 106 with adhesive), then elements 116a and 116b could be formed as rectilinear elements and would be interchangeable by inverting them.

It can be seen that there are two broad shapes for the magnetised portions 116a, 116b, 117a, 117b. A first shape is shown in Figures 3A and 3D and is generally referred to with 116. The second shape is shown in Figures 3B and 3C and is generally referred to using numeral 117. This allows the portions to be supplied as unmagnetized, but magnetisable, portions 116, 117, having no permanent magnetisation (sometimes referred to as magnetisable portions or elements). Once mounted to the rotor body 100, the unmagnetized portions can be magnetised in situ. Either way, this allows the rotor body 100 to be formed from a material specific to the requirements of the motor body (in terms of mechanical strength, durability, density, magnetic properties, etc.), while the magnetisation can be provided by separate elements 116, 117 formed of a material specifically selected for its magnetisation properties e.g. to use a strongly magnetised and/or magnetisable material to provide a large magnetic flux and thereby to increase the torque generated by external stator coils interacting with the rotor body 100. Of course, the efficiency advantages of the presently disclosed design stem in part from the reduced weight of the rotor body 100, so there is a benefit in supplying this lighter rotor body 100 in general, with specific magnetic arrangements being later configurable to any specific use which is desired.

An example material from which the magnetised portions 116a, 116b, 117a, 117b, or the magnetisable portions may be made is neodymium-based magnetic alloys such as NdFeB, for example the N42H class. Exemplary magnetic characteristics of this material are as follows:

| **Characteristic** | **Units** | **Minimum** | **Nominal** | **Maximum** |
|---|---|---|---|---|
| Residual Induction, Br | G (Gauss) | 12,800 | 13,000 | 13,200 |
| | mT | 1,280 | 1,300 | 1,320 |
| Coercivity, H_{cB} | Oe (Oersteds) | 12,000 | 12,300 | 12,600 |
| | kA/m | 955 | 979 | 1,003 |
| Intrinsic Coercivity, H_{cJ} | Oe (Oersteds) | 17,000 | - | - |
| | kA/m | 1353 | - | - |
| B_{h,max} | MGOe | 40 | 42 | 43 |
| | Kj/m³ | 318 | 330 | 342 |

In addition to the magnetised or magnetisable elements 116, 117 shown in Figures 3A to 3D, a protective sleeve 118 may be fitted around the magnetised or magnetisable elements 116, 117. Such a protective sleeve 118 is shown in Figure 3E. As the name suggests, this sleeve 118 protects the magnetised or magnetisable elements 116, 117 from damage, water, air, etc. In addition, the material may be selected to interact in a desired manner with the magnetic field of the magnetised or magnetisable elements 116, 117, for example to smooth out inhomogeneities in the field, provide a boosting effect, etc.

In some examples, the magnetisation for the rotor body 100 may be applied directly to the second cylindrical portion 106, which may allow for a further reduction in the weight of the rotor body 100.

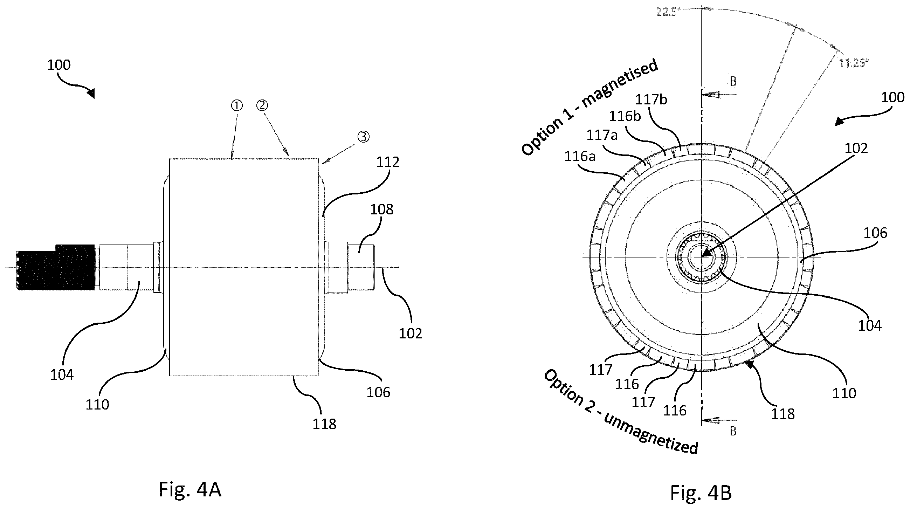

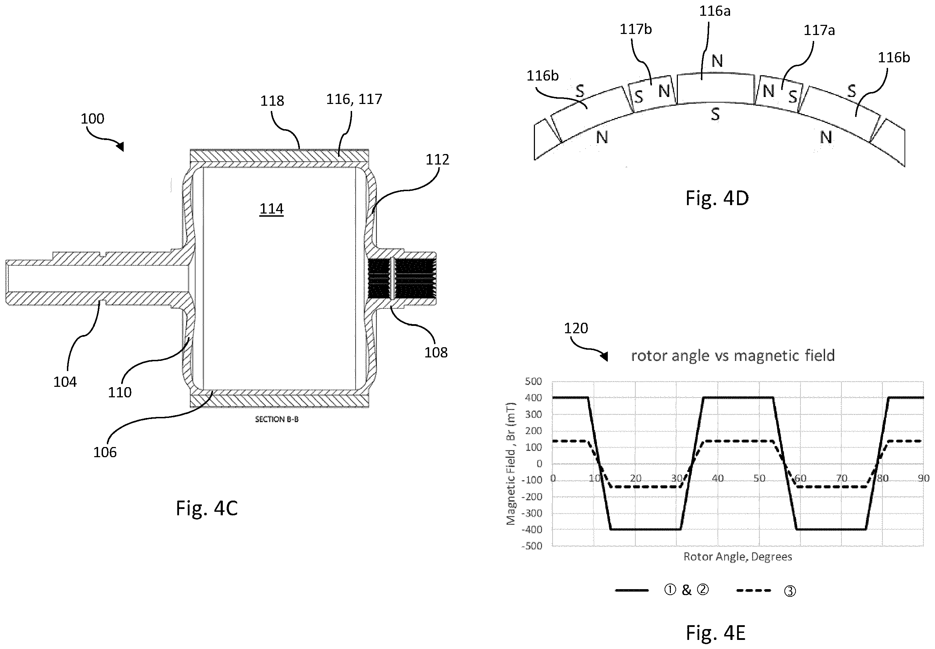

The rotor body 100 is shown with the magnetised or magnetisable elements 116, 117 and the protective sleeve 118 fitted in Figures 4A to 4E. Figure 4A shows the rotor 100 in side elevation, while Figure 4B shows the rotor 100 in an axial view, indicating the arrangement of magnetisable elements. Figure 4C shows a cross-sectional view of the elevation shown in Figure 4A. Figure 4D shows a detail of the arrangement of the magnetised or magnetisable elements 116, 117 to form a Halbach array, and Figure 4E shows a plot 120 the magnetic field strength for a quarter turn of the rotor 100 (which has eight-fold symmetry), measured at the positions ① (radial direction), ② (radial direction) and ③ (axial direction) indicated in Figure 4A.

The magnetised or magnetisable portions 116, 117 are attached using any suitable means. The inventors have found epoxy resins to be a suitable means, for example, the magnetised or magnetisable portions 116, 117 may be embedded in the epoxy resin. This provides a strong and durable mounting and may also provide protection from moisture. The protective sleeve 118 can be seen enclosing the magnetised or magnetisable portions 116, 117. The protective sleeve 118 may also be held in place with epoxy resin, for example, the same resin, applied in a single assembly step, to provide a consistent mounting medium.

The magnetised portions 116, 117 are shown arranged in a Halbach array, such that a strong flux side of the array is outwardly facing. A Halbach array is an arrangement of magnetic elements which directs magnetic flux such that it is strongly focussed in one direction and is weak in the opposite direction. In planar Halbach arrays, the array consists of a sequence of alternating magnetisations between sideways and inward/outward. More specifically, moving from left to right, the sequence of magnetisation is: right pointing, outward pointing, left pointing, inward pointing, and then repeating starting with right pointing again. Of course, the array can start and finish at any point in this sequence, so long as there are several complete cycles. This array focusses the magnetic flux towards the outward surface, and has little magnetic flux directed inwardly. The flux on the outward surface alternates between strong north pole and strong south pole, mirroring the alternating inward/outward magnetic elements (themselves interspersed with sideways elements).

The sideways-directed magnetic elements help to guide flux such as to direct the flux strongly outwardly, with minimal flux being directed inwardly. In the Halbach array of the present application, the planar array is adapted to the context of a rotor by curving the planar array around to a cylindrical shape and ensuring that the arrangement directs the flux to the exterior of the rotor body 100, leaving little flux in the interior 114 of the rotor body 100. Note that the use of a hollow rotor in combination with a Halbach array is particularly beneficial, as this makes use of a synergy between the hollow rotor body 100 and the Halbach array. In brief the Halbach array is arranged to direct most or all of the flux of the magnetised portions outwardly, meaning that the flux in the hollow interior of the rotor is negligible. This in turn means that the rotor body need not be arranged to direct flux in any particular manner, and therefore can be hollow while maintaining a high efficiency.

For most rotor applications, the flux internal to the rotor body 100 is of little interest in and of itself. However, the internal flux requires consideration since it can interact with the outwardly directed flux. For this reason, the interior of traditional rotors is often filled with materials arranged to direct the internal flux in desired directions to ensure that the final rotor output is as intended. Not only is this not a serious issue when a Halbach array is used, but the focussing of the flux towards the exterior of the rotor body 100 means that a stronger magnetic field is generated from a given weight of magnetic elements. This further improves the efficiency of the rotor body 100 described herein by allowing a given magnetic field for lower weights than would be possible without using the techniques set out herein. Even more notably, since the magnetic elements are usually mounted as far from the rotational axis 102 as possible (to bring them as close as possible to the stator elements of a motor), reducing the weight of the magnets required to produce a given magnetic field, the effect of weight reduction in this region has a large effect in lowering the moment of inertia of the rotor body 100, thereby improving efficiency and power to weight ratios.

Consider Figure 4D, which shows the Halbach array in detail. Here, the magnetised portions 116a, 116b, 117a, 117b are shown arranged in accordance with the Halbach array described above. Specifically, an inwardly directed magnetised portion 116b is located at the left of the Figure. Adjacent this magnetised portion 116b to the right is a rightwardly directed magnetised portion 117b. Adjacent to the right of the rightwardly directed magnetised portion 117b is an outwardly directed magnetised portion 116a. Adjacent the outwardly directed magnetised portion 116a is a leftwardly directed magnetised portion 117a. Adjacent this magnetised portion 117a to the right is another inwardly directed magnetised portion 116b, indicating that the pattern repeats again. It can be seen that the collective effect of the internal surface curve of the magnetised portions 116a, 116b, 117a, 117b leads to the magnetised portions 116a, 116b, 117a, 117b collectively forming a cylindrical shell. It will be appreciated that the number, width and curvature of the magnetised portions 116a, 116b, 117a, 117b is chosen to allow this cylindrical shell to comprise an integer number of repetitions of the "in-right-out-left" Halbach pattern described above.

In the examples in this application, the rotor 100 has an eight-fold symmetry as clearly shown in Figure 4B. While the second option in the lower left quadrant ("unmagnetized") has only two types or magnetisable element 116, 117, differing only in their shape (since they will be magnetised later in an appropriate configuration), the first option in the upper left quadrant ("magnetised") has four different magnetised elements 116a, 116b, 117a, 117b arranged in a Halbach pattern. In each of option 1 and option 2, the pattern shown repeats around the circumference of the rotor body 100 for an integer number or repetitions. Here the angular spacing between two adjacent inward or outward magnetic elements 116 is 22.5°, meaning that an unmagnetized rotor 100 would have sixteen-fold rotational symmetry about its rotational axis 102. However, since each adjacent pair of inward or outward magnetic elements 116 has opposite polarity (see Figure 4D), the rotational symmetry of a magnetised rotor 100 is half that of the unmagnetized variant. In other words the magnetised rotor 100 shown in Figures 4A to 4D has eight-fold rotational symmetry about its rotational axis 102.

Also visible in Figure 4D (as well as in Figures 3A to 3D) is that the sideways magnetic elements 117 are narrower than the inward and outward magnetic portions 116. This provides a smoother and stronger radial magnetic field on the exterior of the rotor body 100. However, there is a balance to be struck here, since if the sideways magnetic elements 117 are too narrow, the Halbach effect is diminished and flux in the internal cavity 114 increases.

As seen in this application, a width ratio of about 2:1 provides an acceptable balance, with the inward and outward elements 116 being about twice as wide as the sideways elements 117. variants on this ratio are, of course, possible. For example, the ratio may be anywhere between 4:1 and 1:1.

In Figure 4C, a full length of one single magnetised or magnetisable element 116, 117 is shown in side elevation. Consequently no join is visible in the magnetised or magnetisable element 116, 117 this view. This highlights the elongate nature of the magnetised or magnetisable elements 116, 117.

In order to examine the effect of the Halbach array, measurements may be taken at points on the exterior of the rotor body 100. Three points are chosen, shown in Figure 4A as points ①, ② and ③. The magnetic field strength at these locations as a function of rotor angle (i.e. angle around the rotational axis) is shown in the plot 120 in Figure 4E. Here it can be seen that for the Halbach array shown in Figures 4A to 4D, the radial flux measured at points ① and ② is consistent along the length of the second cylindrical element 106. Moreover, the transitions between outward and inward directed moments is sharp and monotonic. In addition, the magnetic field strength rises quickly to a maximum value of about ±400mT and is consistently at this value for a large angular range. By contrast, the axial fields at point ③, which are indicative of the flux in the interior 114 of the rotor 100 have a similar shape but are notably lower (peaking at about ±150mT), indicating good flux focussing towards the outside and away from the inside of the rotor 100.

The designs shown lead to improvements in power to weight ratios for rotors 100. For example, the rotor body 100 may be at least 100mm long, with the diameter of the second cylindrical portion 106 being at least 75mm, and an axial length of the second cylindrical portion being at least 50mm long. Nevertheless, the rotor body may weigh 1kg or less. In particular, the power : weight ratio for rotor bodies of the type described herein may be at least 18kW/kg, with larger rotors being able to provide higher power: weight ratios. In some cases power : weight ratios of 20 kW/kg, 25kW/kg or even 30kW/kg or higher are achievable.

Finally, turning to Figures 5A and 5B, in which alternative arrangements for the rotor body 100 are shown, in which the rotor body is multi-part. Specifically, Figure 5A shows a two part rotor body 200, in which a series of reference numerals 2XX replace the 1XX series used above, where XX is a two-digit number referring to similar parts in Figure 5A as those described above. Similarly, Figure 5B shows a three part rotor body 300, in which a series of reference numerals 3XX replace the 1XX series used above, where XX is a two-digit number referring to similar parts in Figure 5B as those described above. To avoid repetition, the description of these similar features will not be repeated in detail here.

In Figure 5A, the two-part rotor 200 has been formed by forming (e.g. hot or cold forming) two parts into the shape shown. For example, two tubular portions may be heated at one end and deformed to form two "goblet-shaped" portions with a widened diameter portion 206 at one end, and a narrower (optionally undeformed) portion 204, 208 at the opposite end. As above, the formation may make use of spinning or separate shaping elements. Note that because this rotor body 200 is formed from two parts, it is possible to shape the interior of the cavity 214, and thereby have greater control over the overall weight and the distribution of mass in the final rotor body 200. Once two goblet-shaped portions have been produced (and optionally machined), the rotor body 200 is assembled by joining the two goblet-shaped portions at their rims. In this way the wide portion of the goblet-shape of each part becomes the second cylindrical portion 206. Note that the two-part rotor body 200 has a joining ring 222 located around a circumference where the rims of the two goblet-shapes were joined to one another. This may, for example be a welded join, or any other join of suitable strength. Note that the join need not be located in the middle of the second cylindrical portion 206 as shown here, but anywhere along the axial length of the rotor body 200 if desired.

In the examples in Figure 5B, a three part rotor body 300 is provided. This may include, for example a left axle portion 304, 310, a right axle portion, 308, 312, and a central hollow rotor portion 306. As above, the formation may make use of spinning or separate shaping elements, if required. Note that because this rotor body 300 is formed from three parts, it is possible to shape the interior of the cavity 314, and thereby have greater control over the overall weight and the distribution of mass in the final rotor body 300. Once the three portions have been produced (and optionally machined), the rotor body 300 is assembled by joining the three portions together as shown in Figure 5B, where the two circumferential joints 322 indicate that a join is made in that location. This may, for example be a welded join, or any other join of suitable strength. Note that the join need not be located at the ends of the second cylindrical portion 306 as shown here, but anywhere along the axial length of the rotor body 300 if desired.

It will be appreciated that more than three parts may be used in some cases, of course, with the above two-part rotor body 200 and the three-part rotor body 300 being mere examples. In each case, the multi-part hollow rotors 200, 300 may include induction heating applied to a desired part (or all) of the starting tube(s), and the tube, once hot, may be deformed by compressing the ends of the tube and/or by spinning the tube and/or shaping the tube using external tools such as rollers to shape the tube, causing the heated section to bow outward. In conjunction with external shaping tools (e.g. shaping rollers of circular cross-section), the final diameter of the heated section can be carefully controlled to a desired size. In addition, by spinning the rotor as it is heated and shaped, the part can be formed with a consistent diameter in all angular directions (i.e. the widened portion is very close to being perfectly cylindrical). If needed, additional processing, for example milling, may be applied to the rotor to improve its rotational symmetry, before and/or after joining any of the parts together. As part of the machining stage, it is also possible introduce features such as screw threads, attachment features, connectors etc.

In each case, the location of the joints 222, 322 can be chosen to minimise the strain on the joints during rotation of the rotor body 200, 300. From here, a hollow rotor body 200, 300 is formed which may be largely identical in shape to the rotor body 100 described above in respect of e.g. Figures 1A and 1B. This allows magnetised or magnetisable portions 116, 117 to be attached, as well as the other further development ideas discussed above, of course.

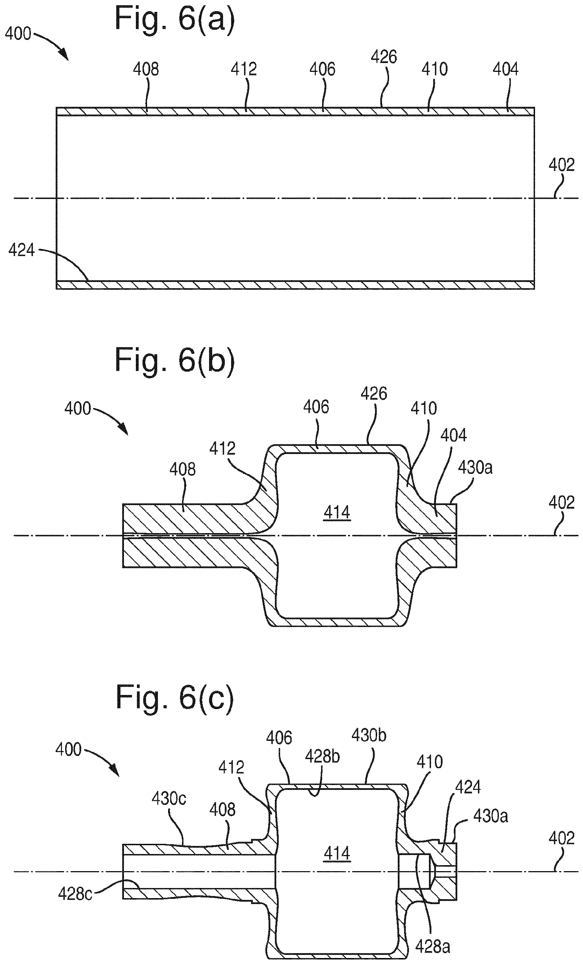

Consider now Figures 6a to 6c showing three steps of a process to form a rotor 400. Figure 6a shows a tubular raw device 400 made of material which may be deformed after heating. The goal of the hot forming process is to produce a rotor for an electrical machine. The material may be metal, preferably steel or iron. The tubular device has at least five sections or compartments which are made from the same material (and usually provided as a single part). The five regions are a first end 404, a first transition region 410 (which becomes a first end cap 410 during the process), a central portion 406, a second transition region 412 (which becomes a first end cap 410 during the process), and a second end 408.

As can be seen, the tube 400 in Figure 6a has a constant internal diameter along a length of the tube 400. Similarly, the tube 400 has a constant external diameter, in other words the tube 400 is cylindrical. At this stage in the process (Figure 6a), the tube 400 may have various treatments applied to it, such as mechanical shaping; application of surface finishes; attachment of magnetic, cooling or heatsinking parts and so forth to the inner 424 and/or outer 426 surfaces the tube 400.

In Figure 6b, the tube has been deformed at both the first 404 and second 408 ends. This deformation forces material from each end 404, 408 towards the central axis 402, thereby enclosing a cavity 114 between the two end caps 410, 412 and the central portion 406. This forms the first 410 and second 412 transition regions into first 410 and second 412 end caps. In order to achieve this deformation, the first 404 and second 408 end portions are heated to a transformation temperature which allows plastic deformation of the material and transformation of the shape of the heated compartments. Note that the reduction in diameter causes a wall thickening in the two end regions 404, 406. Although not shown, deformations of this type are usually made while the tube 400 is rotated about its longitudinal axis 402, and with external shaping tools used to deform the tube 400 into its desired final shape. This can help to ensure that the end result still has rotational symmetry.

The tube 400 may be clamped in the central portion 406 during this process. The central portion 406 is not usually heated as much as the end and transition portions 404, 408, 410, 412 are heated, and thereby retains its material properties during the procedure. Any clamping may also provide a heatsinking effect to reduce heating of the central portion 406. Thus, there is almost no deformation in the central portion 406 and this portion retains broadly the same shape as before transformation.

The end caps 410, 412 show increasing wall thickness and gently curved transition areas. The resulting cross-sectional profile is a result of the functional shape of the hot forming reduction tool and of the material properties of the transformed compartments and of the thermal and mechanical process in detail but is one over which a good degree of control is available where careful control over hot forming techniques and parameters is exercised.

The method may be terminated at this stage if desired. However, Figure 6c shows a final state of this example, in which mechanical treatment has been applied after the deformation. In particular, turning and drilling of the transformed device 400 is shown. The inner surfaces of the first 428a and second 428c ends may be drilled after transformation. Similarly, the outer surfaces of the two ends 430a, 430c, the central portion 430b and the two end caps can also be milled or otherwise mechanically treated if needed, as well as having additional components attached to them in order to achieve an optimised design. However, the inner surface 428b of the central region and the inner surfaces of the end caps 410, 412 are not typically machined at this stage since they are not easily and reliably accessible. This is the reason for ensuring that these regions are provided in the format they are intended to be used in at the start of the process.

The central portion 406 may include partially flat areas which are designed to have magnetic, magnetised or magnetisable portions attached thereto (as in e.g. Figure 4D). The wall thickness of this region 406 may be optimised by removing as much material as possible without creating mechanical stability. The dynamic and or static rotational balance may be achieved by taking off more material in some parts and/or less material in other parts areas of the central portion 406 and or the end caps 410, 412.

The hot formed process allows the rotor 400 to start as a thin-walled cylinder 400. Before starting, machining can be applied where possible and desirable to reduce weight and/or provide desirable surface properties to both internal 424, 428 and external 426, 430 surfaces. This thin-walled, lightweight technology can be used for all motor designs, e.g. for existing technologies such as slotted motors. However, with conventional motors such as slotted motors the thin wall 406 can lead to increases in eddy losses in the material, reduced magnetic strength due to lack of field in the back steel 406 and/or a lack of mechanical support, leading toward thicker backing material being desirable to support such fields. Other methods of a hollow rotor include just a tube in which the magnets are attached to the outer diameter of the tube. Again, this has to be thick to either support mechanical fixings (such as threaded holes) or has to have the mechanical thickness to support press fit of a shaft as to not damage the magnets fixed to the outer diameter of the shaft. All prior solutions required a thick back steel to achieve a desirable solution that works for performance and mechanical requirements. The present invention, by contrast allows the full benefit of the thin-walled arrangement to be utilised.

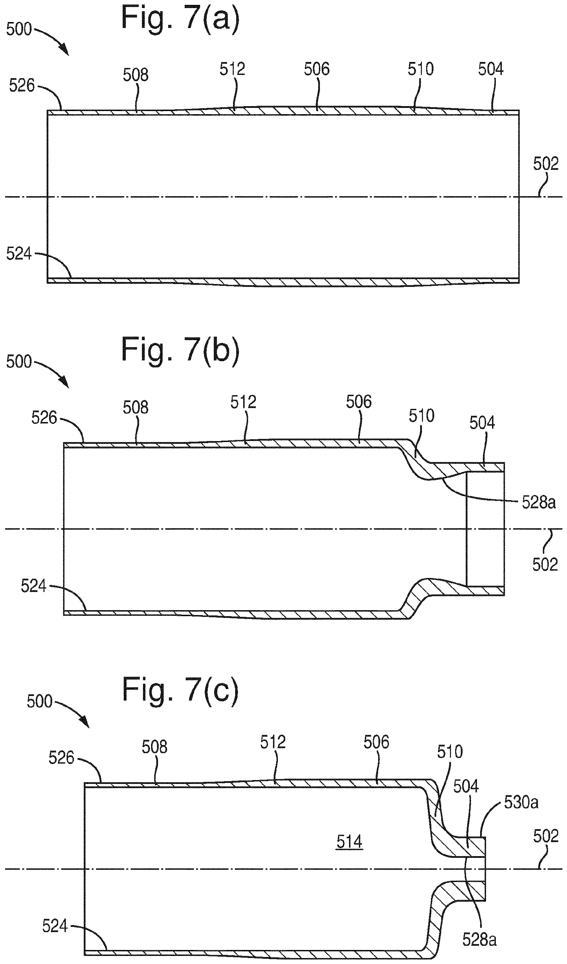

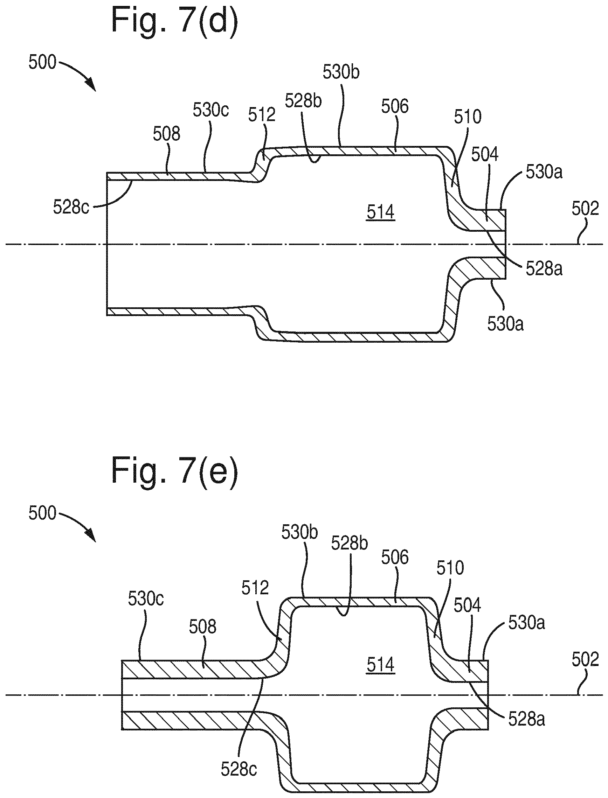

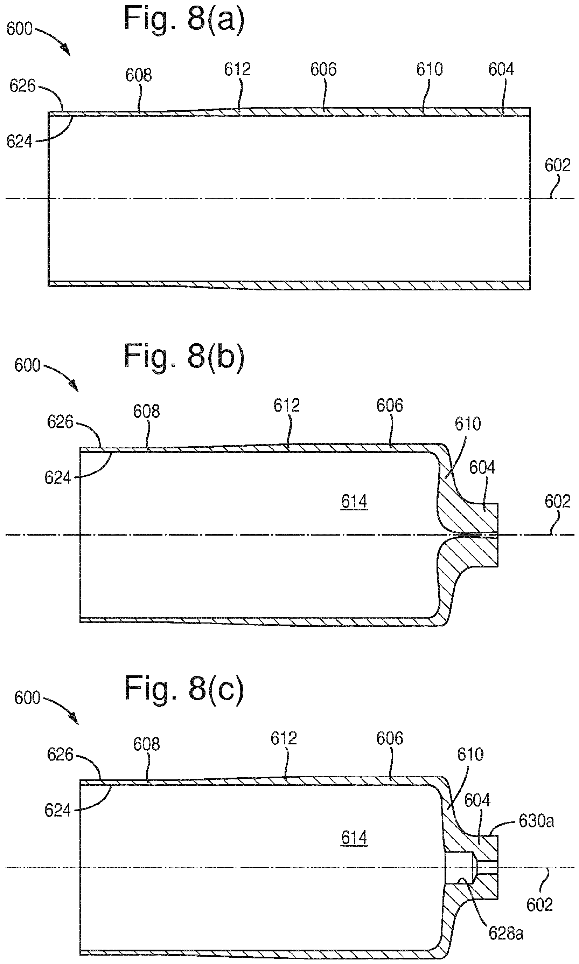

Similar processes are described in Figures 7a-e and 8a-c. Here similar portions of the devices shown in the methods are labelled with similar reference numerals. Specifically for a given part in Figures 6a-c having reference numeral 4xx (where xx represents a two-digit number), an equivalent part in Figure 7 is represented by 5xx and in Figure 8 by 6xx. The specific details of these equivalent parts will not be described in detail again where the details, usage, etc. are broadly the same as in Figures 6a-c.

In Figures 7a-e, a different process for forming the rotor 500, this method including five different stages. A first difference to note is the difference in shape of starting tube 500. Here the thickness of the tube wall at the ends 504, 508 is thinner than the wall thickness at the central portion 506. The transition regions 510, 512 (which will become the end caps 510, 512) taper from a thin end located adjacent to their respective ends 504, 508 and become thickest close to the central portion 506, forming a smooth curved profile with the thickest portion at the central portion 506. Of course this tube shape and other variations thereof may be applied to the other formation methods described herein. This tube shape may be provided by any suitable process, for example machining the tube 500 prior to commencing the hot forming process.

The process for deformation proceeds in a similar manner to that described with respect to Figures 6a-c above, and these steps will not be described in detail, with the differences forming the focus of the present discussion. It will be seen that a difference is that the first end 504 is deformed separately to the deformation of the second end 508. That is one of the ends is deformed, and the other end is subsequently deformed. In the present example the first end 504 is deformed first and the second end 508 is deformed second, although the order could of course be reversed in other examples.

In the example shown, the intermediate step of Figure 7b shows a partial transformation of the first end 504 and the start of the deformation of the first transition region 510 into the first end cap 510. A hot forming tool (not shown) is used to press the outer surface 530a of the first end 504 towards the longitudinal axis 502. A suitable place to grip the tube 500 during this procedure is the central region 506, which again may help protect the central portion 506 from heat and mechanical damage. The second end 508 and second transition region 512 are left untransformed at this stage.

Figure 7c illustrates the end of the process which deforms the first end 504. Here the final shape of the first end 504 and its corresponding first transition portion 510 is shown. The wall thickness after the hot forming process for the first end 504 is reduced compared to the wall thickness in the first end 404 of Figure 6b because the wall thickness of the tubular device 500 was reduced at the first end 504 prior to the deformation process leading to less material in the first end 504 in Figure 7c.

Although no further hot forming of the first end 504 occurs in the rest of the method, it can be seen that the cavity 514 in the interior of the tube can be accessed and further machining work can occur. Not only can the internal surface 524 of the central 506 and second end 508 portions still be accessed, but so can the internal surfaces 528a of the first end 504 and even first transition region 510. Therefore, after deforming the first end 504 and prior to continuing with the method, a machining step may be applied to an interior of the central portion 524; an interior surface of the first end portion 528a; and/or an interior surface of the first end cap 528a. In addition, other treatments may be applied at this stage such as: application of surface finishes; attachment of magnetic, cooling or heatsinking parts and so forth to the inner 524, 528 and/or outer 526, 530 surfaces of the tube 500. By deferring these processes until the rotor 500 is partially formed, the risk of damaging these features during hot forming and deforming is reduced.

The process continues to apply a similar deformation to the second end 508, as shown in Figures 7d and 7e. This proceeds in much the same manner as the deformation of the first end 504, and in particular results in a thinner wall thickness at the second end 508 that was seen in the equivalent portion (408 in Figure 6b) because the thinner starting tube 500 at the second end 508 means that there is less material in this region.

Figure 7e shows a final step of this hot forming procedure. Now both ends 504, 508 are transformed to a higher wall thickness at reduced outer diameter. The length of the tubular device 500 may be reduced according to the hot forming treatment of the ends 504, 508. Without reduction of the length during hot forming, the wall thickness in the end caps 510, 512 would be thinner than shown. Axial pressure combined with reduction of outer diameter may be used in order to achieve a desired wall thickness in the end caps 510, 512. This results in the same general shape as in the other rotor examples herein, in that the rotor 500 encloses a cavity 514 between the end caps 510, 512 and the central portion 506.

After the plastic transformation of rotor 500 into this shape by hot forming, the rotor 500 may undergo further shaping procedures, e.g. machined and/or turned and/or drilled and/or treated by other techniques in order to achieve a final shape and structure which is designed to be a well-designed or optimised rotor 500. At this stage, the shaping is most easily applied to any external surface, or to the internal surfaces 528a, 528c of the two end portions 504, 508 (e.g. by drilling). In general it will be seen that the first of the two ends 504, 508 to be deformed in this process is much easier to reshape after the first hot forming process. Therefore, it is beneficial to deform first the end which is expected to require the most amount of post-processing in this way.

Consider now Figures 8a-c, which show yet another example of a process for forming a tube 600 into a rotor 600. Here again the tube 600 begins having a different shape. Here the thickness of the tube wall at the first end 504 matches that of the central portion 606, yet the wall thickness at the second end 608 is thinner than the wall thickness at the central portion 606. The first transition region 610 also has the same wall thickness as the central portion 606 but the second transition region 512 tapers from a thin end located adjacent to the second end 608 and becomes thickest close to the central portion 606, forming a smooth curved profile with the thickest portion at the central portion 506 and the first end 604. Of course this tube shape and other variations thereof may be applied to the other formation methods described herein. This tube shape may be provided by any suitable process, for example machining the tube 600 prior to commencing the hot forming process.

As in the method of Figures 7a-c, the first end 604 is deformed first. Figure 8b shows the result of a first step of hot forming which ends up in a transformed first end 604 and a transformation of the transition region 610 to start to become a first end cap 610. The central region 606 remains undeformed by either hot forming or mechanical deformation.

In Figure 8c, the first end 604 has been fully deformed by bringing the material close to the longitudinal axis 602. In addition, material has been removed from the first end 640. The access for the takeout tool such as a mechanical tool or laser tool is provided through the wide opening in the second end 608 of the component 600. After the hot forming transformation of the first end 604 additional treatments and procedural steps may be applied in order to create additions of material or subtractions of material inside of the cavity 614, at the inner wall of the first end cap 610 and the first end 604. this can shape the first end 604 into an appropriate form to act as a rotor shaft. After this treatment, the second end may be transformed in much the same way as shown in Figures 7d and 7e. As above, in addition to shaping the interior of the first end 604, additional steps may be taken such as further machining steps applied to an interior of the central portion 624; an interior surface of the first end portion 628a; and/or an interior surface of the first end cap 628a. In addition, other treatments may be applied at this stage such as: application of surface finishes; attachment of magnetic, cooling or heatsinking parts and so forth to the inner 624, 628 and/or outer 626, 630 surfaces of the tube 600. By deferring these processes until the rotor 600 is partially formed, the risk of damaging these features during hot forming and deforming is reduced.

As in other examples, the central portion 606 does not undergo any deformation, and so can be selected to have any wall thickness demanded by the envisaged application. Since this is not deformed, the tolerance of this thickness can be tightly controlled ahead of manufacture and the rotational symmetry of this portion can be assured to a high degree of accuracy. In addition, the wall thickness can be chosen to be substantially thinner than in other designs due to this specific manufacturing process. Finally, since the end portions 604, 608 are deformed to become narrowed portions at each end, the material making up the end portions of the tube is distributed over a smaller diameter by the time the method has completed. This reduction in diameter results in the wall thickness of those regions becoming thicker (since a fixed amount of material becomes distributed over a smaller cross-sectional area when the diameter of that part is reduced in the narrowing process). In order to counteract this, the wall thickness of the tube provided at the initial stage of the process may be thinner at either or each of the ends 604, 608, with the specific thickness being chosen to provide the desired final wall thickness at the narrowed ends at the end of the process.

In general the hot forming processes may involve heating. The heating (whether provided by induction or otherwise) may be applied only to the portions of the tube which are to be deformed (e.g. the first end, the first end cap, the second end cap, the second end).

The hot forming methods discussed above start with a tubular device which may be a straight tube but also may be a shape created by mechanical treatment. For example, thinner walls in the tubular device can mean less material to is needed to be removed later (which may be difficult or impossible in any case, once the rotor has been formed to enclose a cavity) to achieve a lower weight rotor. The increased complexity in the construction procedure is justified by the improved efficiency of the electric motor due to the lighter rotor.

It will be apparent that the initial tube may have many starting forms. For example, it may be a part of a straight cylindrical tube with constant diameters inside and outside; a machined tubular device created by turning of a tube while taking off some material in order to achieve pre-optimised wall thickness to start the hot forming process; or a tubular device created by a different transformation method (forging, pressing, casting).

Magnetised or magnetisable portions may further be attached to an external surface of the central portion in much the same manner as discussed above. The magnetisable portions may be subsequently magnetised (after attachment) to form magnetised portions. Additionally or alternatively the method may include regions of the central portion to form magnetised portions.

Traditional rotor designs have struggled to reduce the weight of the rotor (e.g. by driving the ratio of radial thickness of non-magnetised parts of the central portion to magnetised parts of the central portion as low as possible) because of the negative impacts on mechanical strength and magnetic performance.

It will be appreciated that forming the rotor in this way leads to a rotor having notable differences in physical properties to distinguish from rotors formed in a different manner. This because the method provides a rotor which has been formed from deformations of a single part, meaning that there are no weaknesses due to welding, and having been hot formed, so having fewer strains than cold worked parts. In particular, since the central portion which becomes the central portion to which magnetised parts are added is never heated or deformed, it remains pristine, meaning that this region can be machined, magnetised, etc. as needed prior to the formation procedure without risking changes in these properties due to the heating and/or deformation process, because this part does not undergo those processes.

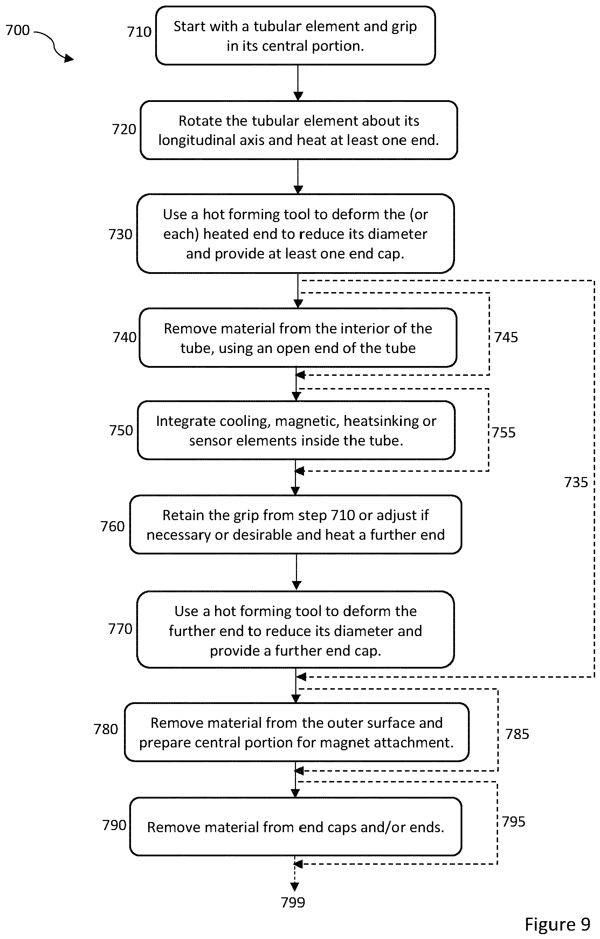

Figure 9 summarises some of the principles of formation of rotors set out herein, in the form of a flow chart 700 highlighting aspects of the process. shows the method 700 how to produce a rotor using a combined hot forming technology.

In Step 710 a tubular element is gripped in a central portion. The grip is usually chosen with high mechanical stability and centricity in order to allow high precision hot forming.

In Step 720 the tubular device is rotated around its longitudinal axis while at least one of the ends is heated. The rotation speed and heating are chosen to provide the desired deformation properties for the material of the tube and the rotor desired. Not only the end may be heated, but also a transition region, in order to allow the transition region to deform into an end cap.

In Step 730 a hot forming tool is used to deform one or both ends to reduce the diameter of the or each end and to shape the first transition region to provide at least one end cap. This will increase the wall thickness and it may shorten the axial length. Following step 730, subsequent steps may be bypassed via alternate route 735, for example where both ends are deformed in step 730, the method may skip ahead to step 780 below.

In Step 740 some material is removed from inside the device by using the access for takeout tools through the wide opening in the second end (where that end has not been deformed in step 730). This may reduce weight and create rotational stability and balance. The takeout may create functional structures like fans or pumping elements or spokes for removing material without unduly impacting the mechanical strength. Some examples do not require this step to be executed, and Step 740 may be bypassed by taking route 745 instead.

In Step 750 elements for cooling, magnetic or heatsinking purposes are integrated into the central portion. These inserts may interact with the structures inside of the central portion and the end caps. The inserts may create additional functionality e.g. for cooling of the rotor or for magnetic or supplying in-built sensors. Some examples do not require this step to be executed, and Step 750 may be bypassed by taking route 755 instead.

In Step 760, in some examples the grip at the central portion may be re-taken or rearranged, and if there is an as-yet undeformed end, that end (and also transition region) is heated. Alternatively the same grip may be retained, thereby effectively bypassing Step 760. The goal in any case is to keep or re-achieve optimized centricity for the second part of the hot forming procedure. In some examples, as discussed above, the first and second ends may be deformed concurrently or simultaneously, so resulting in the method being able to skip from completion of the first hot forming step 730 or the machining step 740 or the integration of additional components step 750 straight to the final machining steps 780, 790, or even to the end of the process.

In Step 770 a hot forming reduction tool is used to reduce the diameter of a second end and to shape the second transition region. The shape and function of the second reduction tool may be different to the first reduction tool used in step 730, for example because these regions are intended to have different roles, different external diameters, etc.

In Step 780 material is removed from the outer surface of the central region and the rotor is prepared for magnet fixation and/or magnetisation. The preparation for improved magnet fixation may include milling of linear or flat or partially hollow areas designed for magnet fixation. Some examples do not require this step to be executed, and Step 780 may be bypassed by taking route 785 instead.

In Step 790: further material is removed from the end caps to reduce weight and/or to create rotational symmetry and/or take off material from the end caps to reduce weight and/or to create a mechanical interface. Some examples do not require this step to be executed, and Step 790 may be bypassed by taking route 795 instead.

The method 700 may complete at this stage. Alternatively further steps may be executed, such as fitting magnets (e.g. in a Halbach array arrangement). This may use adhesive (e.g. epoxy resin), as discussed elsewhere. Other steps may include affixing a protective sleeve around the magnets, assembling the rotor into a motor, and so forth.

The rotor bodies 100, 200, 300, 400, 500, 600 described herein are intended to be used with suitable external electrically controlled stator coils to form an electric motor. The disclosure herein therefore extends to an electric motor comprising the rotor body described above. In particular, the electric motor may be a slotless electric motor. An outer layer of slotless stator windings may define a cylindrical cavity and the rotors described herein may be used as a rotor located within that cavity.

In combination with a Halbach array of magnets or magnetised portions on the rotor, the wall of the central (or widened) portion 106, 206, 306, 406, 506, 606 may be made substantially thinner than in known motors. For example, a ratio of radial thickness of non-magnetised parts of the central portion to magnetised parts of the central portion may be made less than 1, less than 0.75, less than 0.5 or even less than 0.25.

The combination of a slotless motor, incorporating a hot formed rotor (which allows for a thin wall) and a Halbach array allows for an extremely lightweight solution where magnetic performance is maintained with the ability to utilise the weight reduction down to just the mechanical requirements of the design. The synergy of these features is not present in any known device and represents a genuine leap forward for the industry.

Due to the magnetic properties of the Halbach array, this thin wall can be optimized to just the mechanical requirements of the electric motor due to the low fields generated in the backing material. That is to say that the rotor can be designed in such a way as to focus on fulfilling the minimum structural (mechanical strength) requirements for the intended use (size, torque, rpm, etc.), without needing additional thickness above and beyond this to direct magnetic flux. Using this advanced rotor with a slotless topology in a motor further improved the applicability of thin wall designs. With conventional (slotted) motors the fields from the stator teeth are higher in magnitude of magnetic flux due to the magnetic gap being much smaller when compared with slotless motors. For example, a slotted motor will have magnetic gaps of 0.3mm-1mm, while the gap slotless motor is approximately 2-8mm. This reduction in magnetic field generated results in lower field strengths being generated in the backing material of the rotor (mechanical support for the magnetised materials) on commutation of the stator. Methods of overcoming this high field generation typically include adding laminated steel to which the magnets are mounted to and/or providing thicker material to reduce losses and help with heat produced by eddy losses to reduce heat-based demagnetisation of the magnets. By using a slotless arrangement, therefore, the thickness of the rotor wall can be made even thinner.

The disclosure of this application also contains the following numbered clauses:
1. A method for producing a rotor for use in a slotless electric motor, the method comprising:
   providing a hollow tube having a first end and a second end and a central portion therebetween; and
   using hot forming to deform the tube to form a first narrowed portion at the first end and a second narrowed portion at the second end; wherein
   the tube is rotated during deformation; and wherein
   during hot forming of the tube to form the first narrowed portion, the first end is heated and during hot forming of the tube to form the second narrowed portion, the second end is heated, thereby providing a rotor in which the central portion encloses a hollow cavity located between the first and second narrowed portions, the central portion having a larger diameter than the first and second narrowed portions and joined to the first and second end portions by first and second end caps respectively.
2. The method of clause 1, wherein hot forming includes heating the hollow tube using induction heating.
3. The method of any one of clauses 1 or 2, further comprising machining the rotor to:
   improve rotational symmetry of the rotor;
   provide attachment features or other connectors on one or both of the narrowed portions; and/or
   to reduce weight of the rotor.
4. The method of any one of the preceding clauses, wherein the method includes:
   deforming the first end to form the first narrowed portion; and subsequently
   deforming the second end to form the second narrowed portion.
5. The method of clause 4 wherein, after deforming the first end and prior to deforming the second end, the method includes applying a machining step to:
   an interior of the central portion;
   an interior surface of the first end portion; and/or
   an interior surface of the first end cap.
6. The method of clause 4 or clause 5, wherein the method includes integrating one or more elements for providing cooling and/or magnetic properties to:
   an interior of the central portion;
   an interior surface of the first end portion; and/or
   an interior surface of the first end cap.
7. The method of any one of the preceding clauses, wherein the tube which is provided at the start of the method has a constant internal diameter along a length of the tube.
8. The method of any one of the preceding clauses wherein the tube which is provided at the start of the method has an external diameter which varies along a length of the tube.
9. The method of any one of the preceding clauses, wherein the tube which is provided at the start of the method has a thicker wall thickness in the central portion between the first and second ends than the wall thickness at each of the first and second ends.
10. The method of any one of the preceding clauses, further comprising attaching magnetised portions to an external surface of the central portion.
11. The method of any one of the preceding clauses, further comprising attaching magnetisable portions to an external surface of the central portion.
12. The method of clause 11 further comprising magnetising the magnetisable portions to form magnetised portions.
13. The method of any one of the preceding clauses, further comprising magnetising regions of the central portion to form magnetised portions.
14. The method of clause 10, clause 12, or clause 13, wherein the magnetised portions are arranged in a Halbach array, in which a strong flux side of the Halbach array is oriented outwardly from the rotor.
15. The method of clause 10, clause 11 or any clause dependent on clause 10 or clause 11, wherein the magnetised or magnetisable portions are attached using an adhesive layer.
16. The method of clause 15, wherein the magnetised or magnetisable portions are bound within the adhesive layer.
17. The method of clause 15 or clause 16, wherein the adhesive layer is an epoxy resin.
18. The method according to any one of the clauses 10 to 17, further comprising fitting a protective sleeve around the magnetised or magnetisable portions, the protective sleeve being located adjacent to and outwardly of the magnetised or magnetisable portions.
19. The method according to any one of the preceding clauses, wherein the hollow tube is formed from iron or iron alloys such as steel.
20. A slotless electric motor comprising:
   an outer layer of slotless stator windings defining a cylindrical cavity; and
   a rotor located within the cylindrical cavity; wherein
   the rotor is hollow, having a rotational axis about which the rotor is rotationally symmetrical, and having:
      a first end portion having a first diameter and located at a first end of the rotor;
      a central portion having a second diameter, larger than the first diameter; and
      a second end portion having a third diameter, smaller than the second diameter, the first and second end portion located at opposed ends relative to the central portion; wherein
      the first end portion is joined to the central portion by a first end cap and the second end portion is joined to the central portion by a second end cap; wherein
      the central portion and the first and second end caps collectively define a hollow cavity in the rotor; wherein
      the central portion is provided with magnetised portions; and wherein
      a ratio of radial thickness of non-magnetised parts of the central portion to magnetised parts of the central portion is less than 1.
21. The motor of clause 20, wherein the rotor is formed as a single piece.
22. The motor of clause 20 or clause 21, wherein the rotor is provided by the method of any one of clause 1 to 19.
23. The motor according to any one of clauses 20 to 22, wherein the magnetised portions are separate elements attached to the central portion.
24. The motor according to any one of clauses 20 to 22, wherein the magnetised portions are magnetised regions of the central portion.
25. The motor according to any one of clauses 20 to 24, wherein the magnetised portions are arranged in a Halbach array with a strong flux side of the Halbach array being outwardly facing
26. The motor according to any one of clauses 20 to 25, wherein the rotor is formed from iron or iron alloys such as steel.
27. The method or the motor according to any one of the preceding clauses wherein:
   the rotor is at least 100mm long;
   the diameter of the central portion is at least 75mm; and/or
   the rotor weighs 1kg or less.

## Claims

1. A method for producing a rotor for use in a slotless electric motor, the method comprising:
providing a hollow tube having a first end and a second end and a central portion therebetween; and
using hot forming to deform the tube to form a first narrowed portion at the first end and a second narrowed portion at the second end; wherein
the tube is rotated during deformation; and wherein
during hot forming of the tube to form the first narrowed portion, the first end is heated and during hot forming of the tube to form the second narrowed portion, the second end is heated, thereby providing a rotor in which the central portion encloses a hollow cavity located between the first and second narrowed portions, the central portion having a larger diameter than the first and second narrowed portions and joined to the first and second end portions by first and second end caps respectively.

2. The method of claim 1, further comprising machining the rotor to:
improve rotational symmetry of the rotor;
provide attachment features or other connectors on one or both of the narrowed portions; and/or
to reduce weight of the rotor.

3. The method of any one of claim 1 or claim 2, wherein the method includes:
deforming the first end to form the first narrowed portion; and subsequently
deforming the second end to form the second narrowed portion.

4. The method of claim 3 wherein, after deforming the first end and prior to deforming the second end, the method includes applying a machining step to:
an interior of the central portion;
an interior surface of the first end portion; and/or
an interior surface of the first end cap.

5. The method of claim 3 or claim 4, wherein the method includes integrating one or more elements for providing cooling and/or magnetic properties to:
an interior of the central portion;
an interior surface of the first end portion; and/or
an interior surface of the first end cap.

6. The method of any one of the preceding claims, wherein the tube which is provided at the start of the method has a constant internal diameter along a length of the tube.

7. The method of any one of the preceding claims wherein the tube which is provided at the start of the method has an external diameter which varies along a length of the tube.

8. The method of any one of the preceding claims, wherein the tube which is provided at the start of the method has a thicker wall thickness in the central portion between the first and second ends than the wall thickness at each of the first and second ends.

9. The method of any preceding claim, further comprising forming a Halbach array on the external surface of the widened portion, in which a strong flux side of the Halbach array is oriented outwardly from the rotor.

10. The method according to any one of the preceding claims, wherein the hollow tube is formed from iron or iron alloys such as steel.

11. A slotless electric motor comprising:
an outer layer of slotless stator windings defining a cylindrical cavity; and
a rotor located within the cylindrical cavity; wherein
the rotor is hollow, having a rotational axis about which the rotor is rotationally symmetrical, and having:
a first end portion having a first diameter and located at a first end of the rotor;
a central portion having a second diameter, larger than the first diameter; and
a second end portion having a third diameter, smaller than the second diameter, the first and second end portion located at opposed ends relative to the central portion; wherein
the first end portion is joined to the central portion by a first end cap and the second end portion is joined to the central portion by a second end cap; wherein
the central portion and the first and second end caps collectively define a hollow cavity in the rotor; wherein
the central portion is provided with magnetised portions; and wherein
a ratio of radial thickness of non-magnetised parts of the central portion to magnetised parts of the central portion is less than 1.

12. The motor of claim 11, wherein the rotor is formed as a single piece.

13. The motor of claim 11 or claim 12, wherein the rotor is provided by the method of any one of claim 1 to 10.

14. The motor according to any one of claims 11 to 13, wherein the magnetised portions are arranged in a Halbach array with a strong flux side of the Halbach array being outwardly facing

15. The method or the motor according to any one of the preceding claims wherein:
the rotor is at least 100mm long;
the diameter of the central portion is at least 75mm; and/or
the rotor weighs 1kg or less.
